# EUROPEAN PATENT APPLICATION

(11) **EP 4 625 299 A1**
(43) Date of publication of application: **01.10.2025**
(21) Application number: 25166592.3
(22) Date of filing: 27.03.2025
(51) Int. Cl.: G06Q 30/0601, G06Q 40/04, G06Q 50/06, G06Q 30/018

(54) **NODE, DATA SHARING METHOD, AND PROGRAM**

(30) Priority: 29.03.2024 JP 2024055179
(71) Applicant: Ricoh Company, Ltd., Tokyo 143-8555 (JP); NGK Insulators, Ltd., Nagoya city, Aichi 467-8530 (JP)
(72) Inventor: NAMIKI, Hitoshi, Tokyo, 143-8555 (JP); KURODA, Mikiro, Tokyo, 143-8555 (JP); HATA, Satoshi, Tokyo, 143-8555 (JP); HIKISHIMA, Hidetoshi, Aichi, 467-8530 (JP)
(74) Representative: SSM Sandmair

(57) **Abstract**

A node for sharing, in a blockchain network, first electricity amount data indicating an amount of produced electricity and first consumption amount data indicating an amount of consumed electricity in an electricity transaction from production to consumption is provided. The node includes a data processing unit configured to perform, in a case where a storage battery is used in the electricity transaction, a process of generating second consumption amount data indicating an amount of electricity consumed in association with charging of the storage battery; and a transmitting unit configured to transmit the second consumption amount data to a particular node in the blockchain network.

## Description

### BACKGROUND OF THE INVENTION

### 1. Field of the Invention

The disclosure herein relates to a node, a data sharing method, and a program.

### 2. Description of the Related Art

In recent years, electricity produced from renewable energy has been attracting attention. Such electricity is produced from renewable energy resources such as solar light, solar heat, wind power, biomass, geothermal power, hydropower, and heat in the atmosphere. As compared to power generation using fossil fuels such as petroleum, coal, and liquefied natural gas, power generation using renewable energy hardly emits carbon dioxide (CO₂) that is a cause of global warming. For this reason, such renewable energy stands out as an environmentally friendly energy resource from among resources used for production of electricity. By using environmentally friendly green energy as described above to operate, for example, factories, companies can increase brand credibility. Further, a method of using a blockchain to carry out transactions of electricity produced by renewable energy is known (see Japanese Patent No. 6863508, for example). The blockchain is called a distributed ledger. The blockchain links a plurality of ledgers, each representing the transaction history of an asset such as electricity, with a plurality of nodes (computers), thus preventing falsification of transaction history data.

Further, in recent years, along with liberalization of the electricity market, various types of electricity retailers have been newly established. Many of such new electricity retailers do not have means to procure electricity by themselves, and often procure electricity by, for example, purchasing only electricity in an amount based on consumption predicted by the Japan Electric Power Exchange (JEPX). Moreover, with the global trend towards decarbonization, the Act on Sophisticated Methods of Energy Supply Structures in Japan requires all electricity retailers to procure at least 44% of their electricity from renewable energy by 2030. With this trend, there is an increasing need for many electricity retailers to secure their own means to procure renewable energy, for example, by having their own power supply of renewable energy such as solar light.

Further, electricity is not produced from renewable energy under a certain condition. For example, electricity is not produced from solar light at night, or electricity is not produced from wind power when there is no wind. For this reason, the supply of electricity derived from renewable energy is unstable. Therefore, there is a disadvantage that stability of supplying electricity derived from renewable energy is insufficient for using electricity derived from renewable energy as base electricity for supporting the social infrastructure. As a compensation method, there has been study to use storage batteries effectively. Specifically, there has been study to stabilize the supply of electricity derived from renewable energy by charging a storage battery with surplus electricity in the daytime or the like, and discharging the electricity when the supply is insufficient at night or the like.

However, when a blockchain network is used for transactions of electricity, there is a problem in that transactions of electricity by using the blockchain would not be flexibly performed if the relationship between traditionally traded electricity and electricity charged into or discharged from storage batteries is not properly linked.

The present disclosure is made in view of the above, and an object of the present disclosure is to flexibly perform transactions of electricity by using a blockchain network when a storage battery is used.

### SUMMARY OF THE INVENTION

The present disclosure provides a node for sharing, in a blockchain network, first electricity amount data indicating an amount of produced electricity and first consumption amount data indicating an amount of consumed electricity in an electricity transaction from production to consumption. The node includes a data processing unit configured to perform, in a case where a storage battery is used in the electricity transaction, a process of generating second consumption amount data indicating an amount of electricity consumed in association with charging of the storage battery; and a transmitting unit configured to transmit the second consumption amount data to a particular node in the blockchain network.

As described above, according to the present disclosure, a transaction of electricity by using a blockchain network can be flexibly performed when a storage battery is used.

### BRIEF DESCRIPTION OF THE DRAWINGS

FIG. 1 is a schematic diagram illustrating a transaction system according to an embodiment;
FIG. 2 is a diagram illustrating an electrical hardware configuration of each of a system and a node;
FIG. 3 is a diagram illustrating each functional configuration of the transaction system;
FIG. 4 is a diagram illustrating each field of a data structure of storage facility data;
FIG. 5 is a diagram illustrating each field of a data structure of electricity amount data;
FIG. 6 is a diagram illustrating each field of a data structure of consumption amount data;
FIG. 7 is a diagram illustrating each field of a data structure of storage amount data;
FIG. 8 is a flowchart illustrating a storage facility registration process;
FIG. 9 is a diagram illustrating an example of a data structure of input data in the storage facility registration process;
FIG. 10 is a diagram illustrating an example of a data structure of storage facility data in the storage facility registration process;
FIG. 11 is a diagram illustrating an example of a data structure of storage amount data in the storage facility registration process;
FIG. 12 is a diagram illustrating the relationship among an electricity amount, a storage amount, and a consumption amount with respect to electricity;
FIG. 13 is a sequence diagram illustrating a charge process when charging is treated as consumption;
FIG. 14 is a flowchart illustrating the charge process;
FIG. 15 is a diagram illustrating an example of a data structure of input data in the charge process;
FIG. 16 is a diagram illustrating an example of a data structure of storage amount data before and after being updated in the charge process;
FIG. 17 is a diagram illustrating an example of a data structure of consumption amount data generated in the charge process;
FIG. 18 is a sequence diagram illustrating a process of allocating renewable energy or non-renewable energy to an undefined (unallocated) storage amount;
FIG. 19 is a flowchart illustrating an allocation process;
FIG. 20 is a diagram illustrating an example of a data structure of input data in the allocation process;
FIG. 21 is a diagram illustrating an example of a data structure of storage amount data before and after being updated in the allocation process;
FIG. 22 is a diagram illustrating an example of a data structure of electricity amount data before and after being updated in the allocation process;

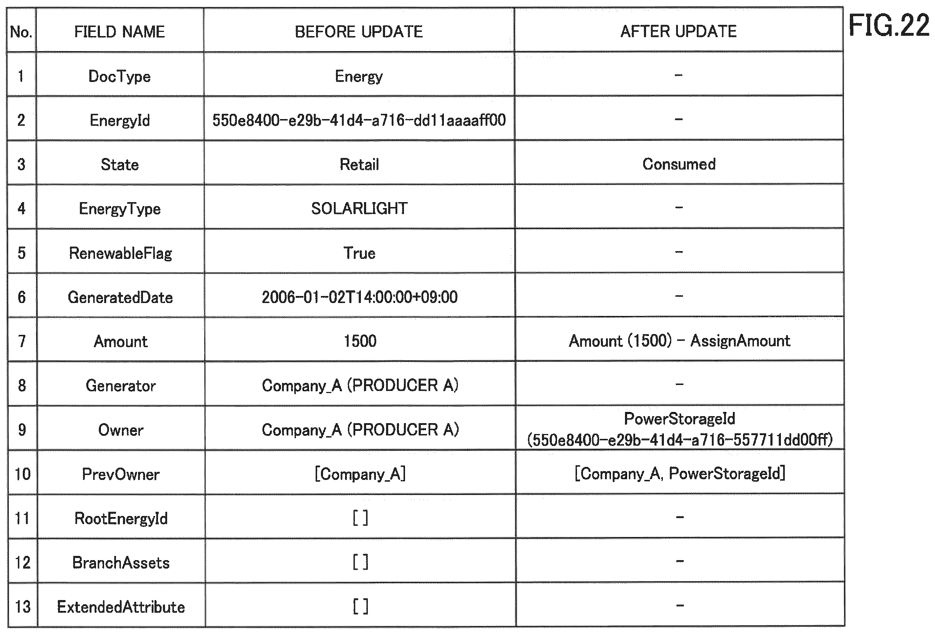

FIG. 22 is a diagram illustrating an example of a data structure of consumption amount data before and after being updated in the allocation process;

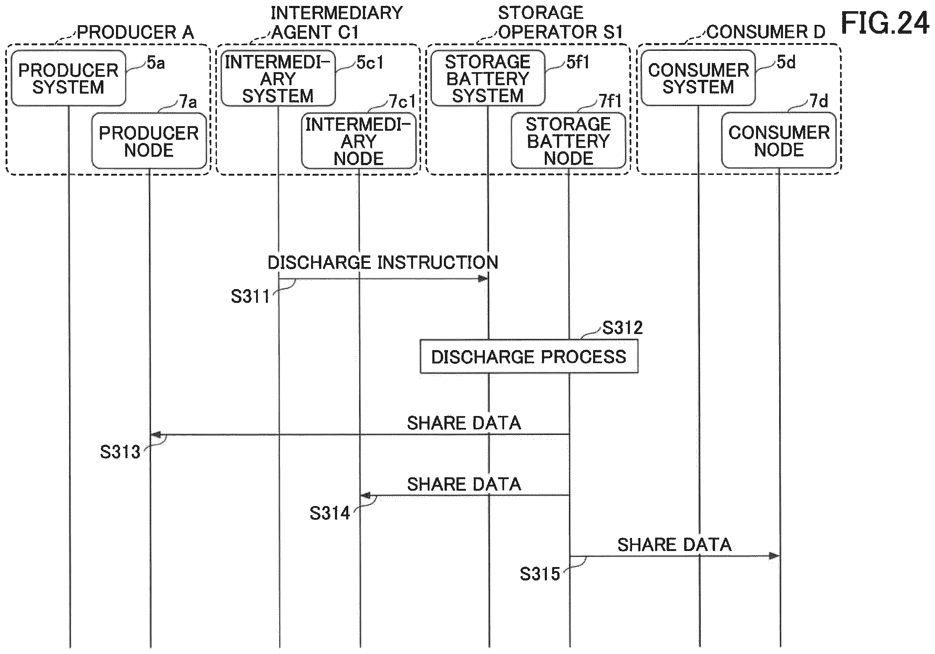

FIG. 24 is a sequence diagram illustrating a discharge process when discharging is treated as production;

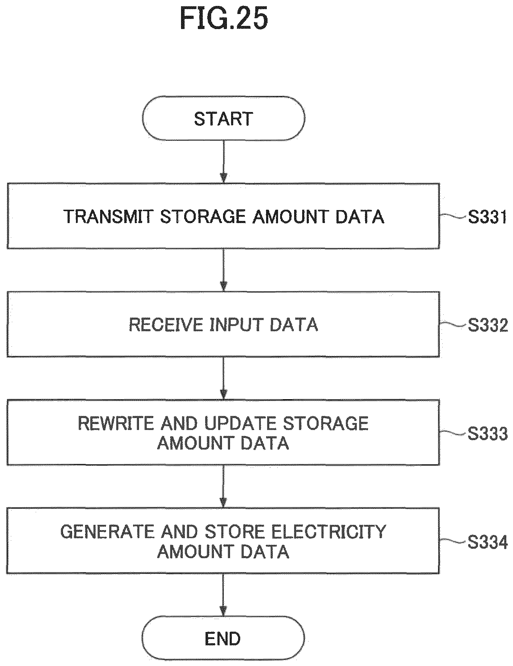

FIG. 25 is a flowchart illustrating a discharge process;

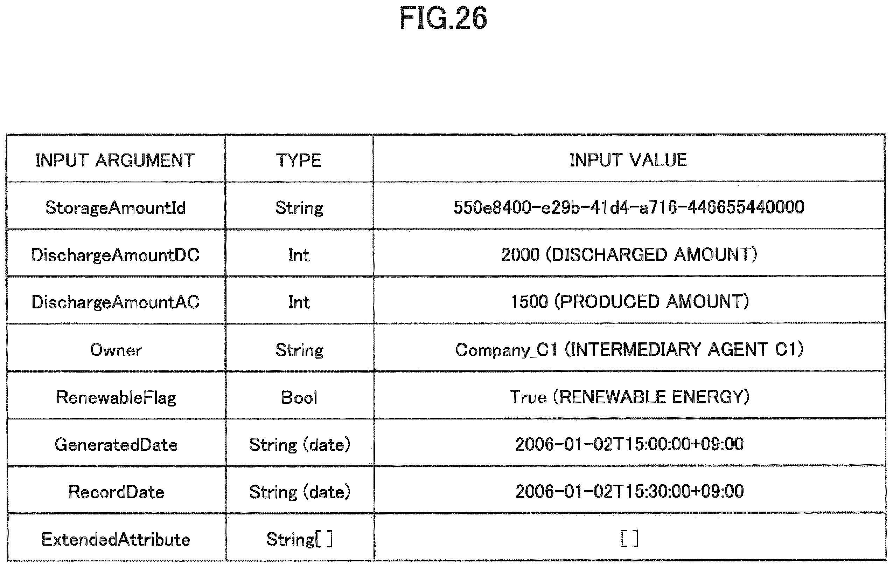

FIG. 26 is a diagram illustrating an example of a data structure of input data in the discharge process;

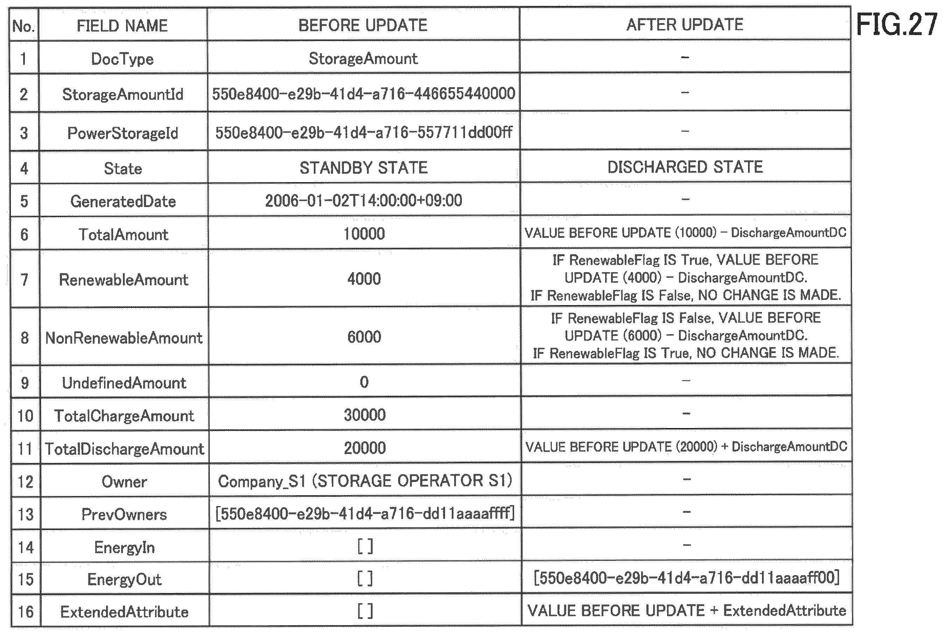

FIG. 27 is a diagram illustrating an example of a data structure of storage amount data before and after being updated in the discharge process; and

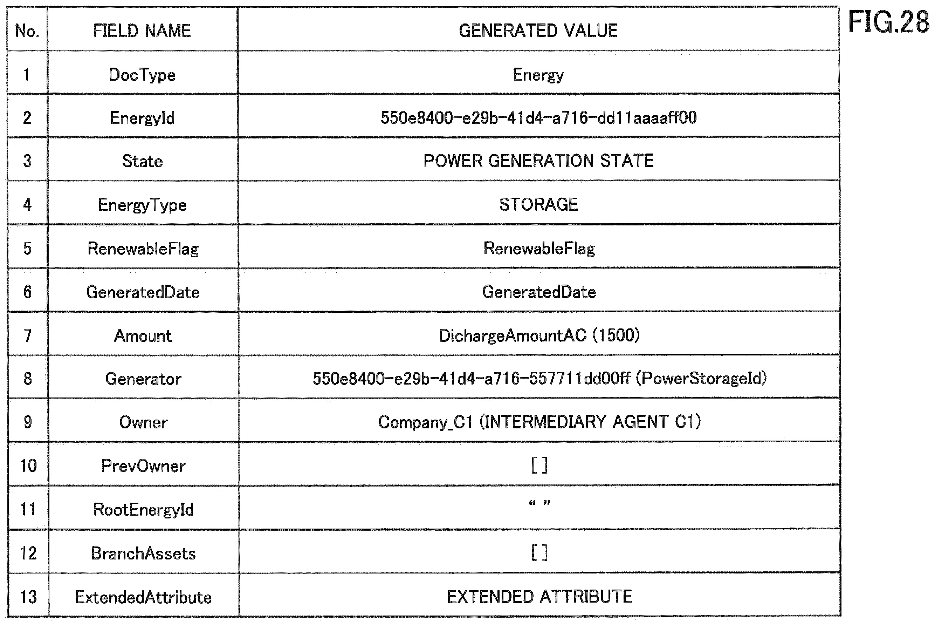

FIG. 28 is a diagram illustrating an example of a data structure of electricity amount data generated in the discharge process.

### DESCRIPTION OF THE EMBODIMENTS

Embodiments will be described in detail below with reference to the drawings.

### [Overview of Configuration of System]

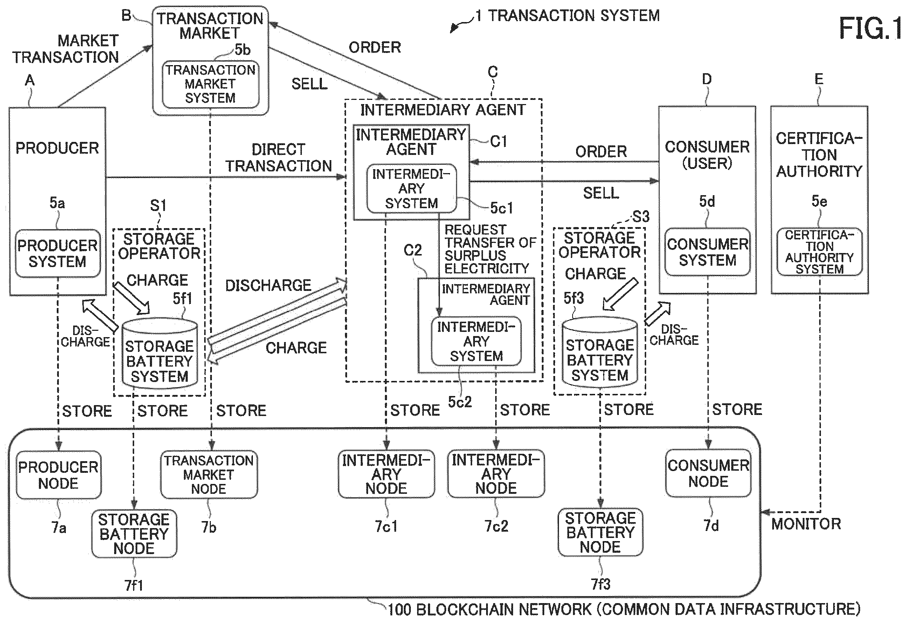

First, an overview of a configuration of a transaction system 1 according to an embodiment will be described. FIG. 1 is a schematic diagram illustrating the transaction system according to the present embodiment. In the following description, an example in which electricity is used as an example of an asset will be described.

### <Description of Entities>

As illustrated in FIG. 1, the transaction system 1 includes a producer A of electricity, a transaction market B of electricity, an intermediary agent C of electricity, a consumer D of electricity, storage operators S1 and S3 of electricity, and a certification authority E. The producer A, the transaction market B, the intermediary agent C, the consumer D, and the storage operators S1 and S3 perform transactions of electricity by using a blockchain network 100, which is an example of a common data infrastructure. The "blockchain" is called a distributed ledger as described above. The blockchain links a plurality of ledgers, each representing the transaction history of an asset such as electricity, with a plurality of nodes (computers) as one chain in a chorological order from the past while using cryptographic technology. The blockchain prevents falsification of transaction history data, thus keeping the transaction history data accurate. Further, the "blockchain network" is a communication network on which the plurality of nodes (computers) using the blockchain reside.

An operator who manages the blockchain network 100 requests entities such as companies (the producer A, the transaction market B, the intermediary agent C, the consumer D, and the storage operators S1 and S3) to register in the transaction system 1, and issues a digital certificate to each entity that has registered. The blockchain network 100 is provided with an application programming interface (API) through which data (such as electricity amount data, as will be described later) regarding interchange or transactions of electricity between various companies can be recorded or read. With the standard API, various companies can generate a ledger on the blockchain network 100 and access the blockchain network 100.

In operation, electricity is distributed from the producer A to the consumer D via a transmission and distribution network, constructed by, for example, substations and transmission lines. The transaction market B or the intermediary agent C manages a transaction of ownership of electricity between the producer A and the consumer D.

The producer A is an example of a supplier and is an entity that produces electricity from solar light, which is an example of a renewable energy resource for producing electricity and is referred to as "green power" in Japan. Other examples of the producer A may include an entity that produces electricity from petroleum as an example of a fossil fuel. However, it is assumed that at least one producer A produces electricity from renewable energy.

The transaction market B is an institution for exchanging (the ownership of) electricity produced by the producer A.

The intermediary agent C is an entity that intermediates the transfer of ownership of electricity between entities. The intermediary agent C makes an order of electric power from the transaction market B, and the transaction market B sells electric power to the intermediary agent C. Further, the intermediary agent C can directly make a transaction of electricity with the producer A without intervening with the transaction market B. In the present embodiment, two intermediary agents C1 and C2 are present. The (ownership of) electricity may be transferred between the intermediary agent C1 and the intermediary agent C2, or only transferred from one of the intermediary agents C1 and C2 to the other. The producer A may also serve as the intermediary agent C.

The consumer D is an example of a user, and makes an order of electricity to the intermediary agent C. The intermediary agent C sells electricity to the consumer D. In the case of an asset that is not consumed like electricity, such as in the case of a real estate property, the user may be an owner who currently owns the asset. With a production method certificate, the consumer D can apply for public subsidy, based on the renewable energy usage ratio (or CO₂ reduction rate) of the consumer D or the total usage of renewable energy of the consumer D.

The storage operators S1 and S3 are operators that temporarily store electricity in transactions of electricity. The storage operators S1 and S3 are collectively referred to as a "storage operator S". The producer A, the intermediary agent C, or the like may also serve as the storage operator S. The storage operators S1 and S3 may be the same storage operator.

The certification authority E monitors transactions to ensure that traded electricity is electricity produced from renewable energy. Specifically, the certification authority E is a public institution such as a national or local public entity, an international organization, or a private third party organization that monitors a type of production method of an asset (a specific type of production method). Examples of types of production methods of electricity include production methods using solar light, solar heat, wind power, biomass, geothermal power, hydropower, heat in the atmosphere, nuclear power, and the like. Of them, production methods using solar light, solar heat, wind power, biomass, geothermal power, hydropower, and heat in the atmosphere are grouped into a production method using renewable energy. Production methods using petroleum, coal, and liquefied natural gas are grouped into a production method using fossil fuels. As compared to the production method using fossil fuels, the production method using renewable energy emits almost no CO₂, which is a cause of global warming. Thus, renewable energy is an energy resource that is environmentally friendly. In the present embodiment, as renewable energy, solar light, solar heat, wind power, biomass, geothermal power, hydropower, or heat in the atmosphere is used. Further, as a fossil fuel, oil, coal, or liquefied natural gas is used.

By monitoring the blockchain network 100, if the certification authority E finds any fraud in data written, the certification authority E gives a penalty such as revocation of a certificate to an entity such as a company that has written the data, such that integrity of the data in the blockchain network 100 is retained. Based on the decentralized system of the blockchain network 100, even if any node drops (drops out of sync), the blockchain network 100 still operates as long as there are other nodes. Because the other companies maintain a system (such as a producer system 5a), business can be continued as usual. Further, information on revocation is shared between the companies in the blockchain network 100, and each company can know a range of influence of such revocation. A node is an information processing apparatus that constructs the blockchain network 100. There may be a plurality of producers A, transaction markets B, consumers D, and certificate authorities E. There may be three or more intermediary agents C. There may be three or more storage operators S.

### <Overall Configuration of Transaction System>

Next, the overall configuration of the transaction system 1 will be described with reference to FIG. 1. Nodes described below authenticate access to each node by checking a digital certificate of a registered company or the like, and allows each node to store (read and write) data.

The producer A owns or manages the producer system 5a and a producer node 7a. The producer system 5a acquires electricity generation information indicating the amount of generated power from a power generation system 3, which will be described later. The producer system 5a can access the producer node 7a.

The transaction market B owns or manages a transaction market system 5b and a transaction market node 7b. The transaction market system 5b can access the transaction market node 7b.

The intermediary agent C1 owns or manages an intermediary system 5c1 and an intermediary node 7c1. Further, the intermediary agent C2 owns or manages an intermediary system 5c2 and an intermediary node 7c2. The intermediary systems 5c1 and 5c2 can access the intermediary nodes 7c1 and 7c2, respectively.

The consumer D owns or manages a consumer system 5d and a consumer node 7d. The consumer system 5d can access the consumer node 7d.

The certification authority E owns or manages a certification authority system 5e. The certification authority system 5e accesses the blockchain network 100 and checks whether traded electricity has been produced from renewable energy.

The storage operators S1 and S3 own or manage storage battery systems 5f1 and 5f3, respectively. The storage battery systems 5f1 and 5f3 can access storage battery nodes 7f1 and 7f3, respectively. The producer A can charge electricity into a storage battery of the storage battery system 5f1 and can discharge electricity from the storage battery of the storage battery system 5f1. In addition, the intermediary agent C can also charge electricity into the storage battery of the storage battery system 5f1 and can discharge electricity from the storage battery of the storage battery system 5f1. Further, the consumer D can charge electricity into a storage battery of the storage battery system 5f3 and can discharge electricity from the storage battery of the storage battery system 5f3.

The producer system 5a, the transaction market system 5b, the intermediary systems 5c1 and 5c2, the consumer system 5d, the certification authority system 5e, and the storage battery systems 5f1 and 5f3 are collectively referred to as a "system 5". The producer node 7a, the transaction market node 7b, the intermediary nodes 7c1 and 7c2, the consumer node 7d, and the storage battery nodes 7f1 and 7f3 are collectively referred to as a "node 7". The blockchain network 100 is constructed by the node 7.

### [Hardware Configuration of Each of System and Node]

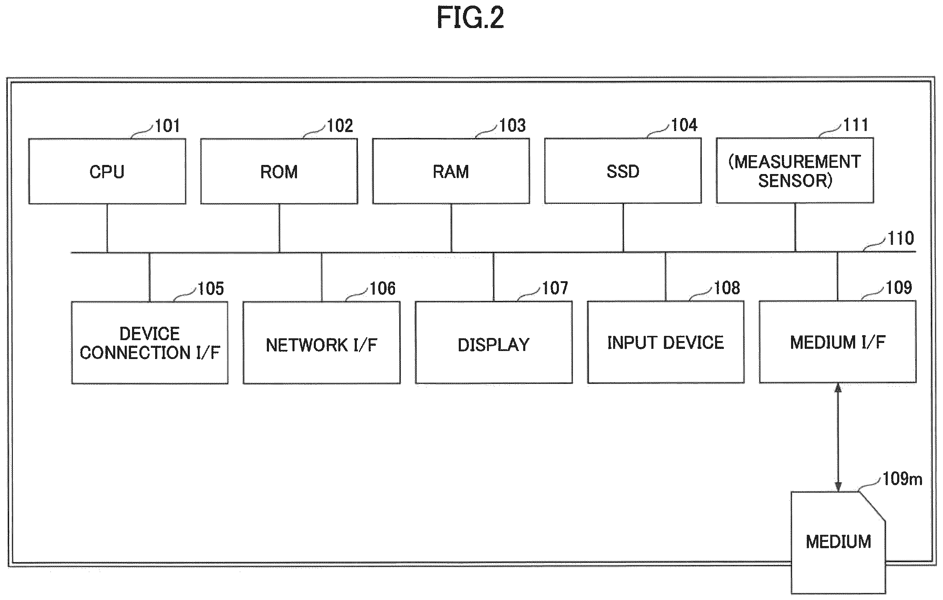

Next, a hardware configuration of each of the system and the node will be described with reference to FIG. 2,. FIG. 2 is a diagram illustrating the hardware configuration of each of the system and the node.

FIG. 2 is a diagram illustrating an electrical hardware configuration of each of the system and the node.

As illustrated in FIG. 2, each of the system 5 and the node 7 serves as a computer and includes a central processing unit (CPU) 101, a read only memory (ROM) 102, a random access memory (RAM) 103, a solid state drive (SSD) 104, an external device connection interface (I/F) 105, a network I/F 106, a display 107, an input device 108, a medium I/F 109, and a bus line 110.

The CPU 101, which serves as a processor, controls the entire operation of the system 5 or the node 7. The ROM 102 stores a program used to drive the CPU 101 such as an initial program loader (IPL). The RAM 103 is used as a work area for the CPU 101.

The SSD 104 reads or writes various types of data as controlled by the CPU 101. A hard disk drive (HDD) may be used instead of the SSD 104.

The external device connection I/F 105 is an interface for connecting to various external devices. Examples of the external devices include a display, a speaker, a keyboard, a mouse, a universal serial bus (USB) memory, and a printer.

The network I/F 106 is an interface for communicating data via a communication network such as the Internet.

The display 107 is an example of a display means that displays various types of images, such as a liquid crystal display (LCD) and an organic electroluminescence (EL) display.

The input device 108 is an example of input means that allows a user to select or execute various instructions, select a target to be processed, or move a cursor. Examples of the input device 108 include a pointing device and a touch panel.

The medium I/F 109 controls reading and writing (storing) of data from and to a recording medium 109m such as a flash memory. Examples of the recording medium 109m include a DVD and a Blu-ray disc (registered trademark).

The bus line 110 is an address bus, a data bus, or the like for electrically connecting the components, such as the CPU 101 illustrated in FIG. 2, to each other.

In addition to the components illustrated in FIG. 2, the power generation system 3 to be described later further includes a measurement sensor 111 that measures the amount of electricity generated. Similarly, in addition to the components illustrated in FIG. 2, the consumer system 5d further includes a measurement sensor 111 that measures the amount of electricity consumed.

### [Each Functional Configuration of Transaction System]

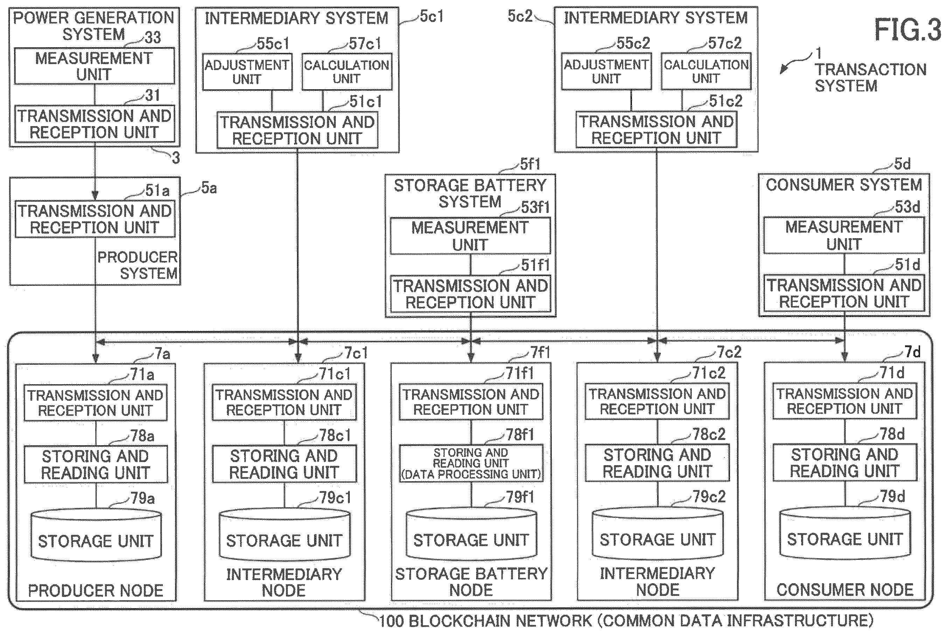

Next, each functional configuration of the transaction system 1 will be described with reference to FIG. 3. The transaction market system 5b and the certification authority system 5e have the same functional configuration as that of the producer system 5a, and thus the description thereof will be omitted.

### <Power Generation System>

As illustrated in FIG. 3, the power generation system 3 is implemented by a smart meter or the like, and includes a transmission and reception unit 31 and a measurement unit 33. These units are functions or means implemented by operating any of the components illustrated in FIG. 2 in response to instructions from the CPU 101 according to a program loaded from the SSD 104 to the RAM 103.

The transmission and reception unit 31 performs data communication with another apparatus (or another system).

The measurement unit 33, which is implemented mainly by the measurement sensor 111, measures the amount of electricity generated by a power generation facility at regular time intervals (for example, every 30 minutes).

### <Producer System>

As illustrated in FIG. 3, the producer system 5a includes a transmission and reception unit 51a. The transmission and reception unit 51a is a function or means implemented by operating at least one of the components illustrated in FIG. 2 in response to the instructions from the CPU 101 according to the program loaded from the SSD 104 to the RAM 103.

The transmission and reception unit 51a performs data communication with another apparatus (or another system).

### <Intermediary System>

### (Intermediary System 5c1)

As illustrated in FIG. 3, the intermediary system 5c1 includes a transmission and reception unit 51c1, an adjustment unit 55c1, and a calculation unit 57c1. These units are functions or means implemented by operating any of the components illustrated in FIG. 2 in response to the instructions from the CPU 101 according to the program loaded from the SSD 104 to the RAM 103.

The transmission and reception unit 51c1 performs data communication with another apparatus (or another system).

The adjustment unit 55c1 performs supply-demand balance control to allocate electricity from the total amount of electricity currently owned by the intermediary agent C1. Specifically, the adjustment unit 55c1 allocates, to the consumer D, electricity having a specific type of production method (indicating solar light, wind power, or the like) in a specific amount, in accordance with details of a contract with the consumer D. That is, the adjustment unit 55c1 allocates a specific asset produced by a specific type of production method, such as electricity produced from renewable energy (electricity derived from renewable energy), to the consumer D, in an amount corresponding to the details of the contract.

The calculation unit 57c1 calculates the amount of power shortage with respect to the electricity to be supplied to the consumer D by the intermediary agent C1 according to the contract. The calculation unit 57c1 further calculates, of the total amount of electricity currently owned by the intermediary agent C1, the amount of electricity that remains even after electricity is supplied to the consumer D according to the contract.

### (Intermediary System 5c2)

As illustrated in FIG. 3, the intermediary system 5c2 includes a transmission and reception unit 51c2, an adjustment unit 55c2, and a calculation unit 57c2. These units are functions or means implemented by operating any of the components illustrated in FIG. 2 in response to the instructions from the CPU 101 according to the program loaded from the SSD 104 to the RAM 103.

The transmission and reception unit 51c2 performs data communication with another apparatus (or another system).

The adjustment unit 55c2 performs supply-demand balance control to allocate electricity from the total amount of electricity currently owned by the intermediary agent C2. Specifically, the adjustment unit 55c2 allocates, to the consumer D, electricity having a specific type of production method (indicating solar light, wind power, or the like) in a specific amount, in accordance with details of a contract with the consumer D.

The calculation unit 57c2 calculates the amount of power shortage with respect to the electricity to be supplied to the consumer D by the intermediary agent C2 according to the contract. The calculation unit 57c2 further calculates, of the total amount of electricity currently owned by the intermediary agent C2, the amount of electricity that remains even after electricity is supplied to the consumer D according to the contract.

### <Storage Battery System>

As illustrated in FIG. 3, the storage battery system 5f1 includes a transmission and reception unit 51f1 and a measurement unit 53f1. These units are functions implemented by operating any of the components illustrated in FIG. 2 in response to the instructions from the CPU 101 according to the program loaded from the SSD 104 to the RAM 103.

The transmission and reception unit 51f1 performs data communication with another apparatus (or another system).

The measurement unit 53f1, which is implemented mainly by the measurement sensor 111, measures the amount of electricity charged in the storage battery of the storage battery system 5f1 and measures the amount of electricity discharged from the storage battery system 5f1.

In FIG. 3, of the two storage battery systems 5f1 and 5f3 illustrated in FIG. 1, only the storage battery system 5f1, which will be described as performing processes and operations below, is illustrated; however, the transaction system 1 also includes the storage battery system 5f3.

### <Consumer System>

As illustrated in FIG. 3, the consumer system 5d is implemented by a smart meter, and includes a transmission and reception unit 51d and a measurement unit 53d. These units are functions or means implemented by operating any of the components illustrated in FIG. 2 in response to the instructions of the CPU 101 according to the program loaded from the SSD 104 to the RAM 103.

The transmission and reception unit 51d performs data communication with another apparatus (or another system).

The measurement unit 53d, which is implemented mainly by the measurement sensor 111, measures the amount of electricity consumed by an electric device at regular time intervals (for example, every 30 minutes).

### <Each Node>

Next, a functional configuration of each node will be described.

The producer node 7a includes a transmission and reception unit 71a and a storing and reading unit 78a. The producer node 7a further includes a storage unit 79a implemented by the ROM 102, the RAM 103, or the SSD 104 illustrated in FIG. 2.

The transmission and reception unit 71a performs data communication with another apparatus (or another system).

The storing and reading unit 78a stores data (information) in the storage unit 79a and reads out data (information) from the storage unit 79a.

The intermediary node 7c1, the intermediary node 7c2, the consumer node 7d, and the storage battery node 7f1 include transmission and reception units 71c1, 71c2, 71d, and 71f1, respectively, each of which has the same functions as those of the transmission and reception unit 71a, and thus the description thereof will be omitted. Further, the intermediary node 7c1, the intermediary node 7c2, the consumer node 7d, and the storage battery node 7f1 include storing and reading units 78a, 78c1, 78c2, 78d, 78f1, respectively, each of which has the same functions as the storing and reading unit 78a, and thus the description thereof will be omitted. Further, the intermediary node 7c1, the intermediary node 7c2, the consumer node 7d, and the storage battery node 7f1 include storage units 79c1, 79c2, 79d, and 79f1, respectively, each of which has the same functions as the storage unit 79a, and thus description thereof will be omitted. The storage battery node 7f1 also serves as a data processing unit, which will be described later.

### <Description of Each Piece of Data>

Next, "electricity amount data", "storage amount data", and "consumption amount data" will be described

### (Electricity Amount Data)

Electricity amount data includes information indicating the state of electricity such as power generation, retail, or consumption. Electricity itself has a very short life cycle, and generated electricity needs to be consumed immediately. The Japanese law requires that supply-demand balance control be performed every 30 minutes, thus the life cycle is, for example, 30 minutes. Note that "power generation", "retail", and "consumption" are examples of "production", "transfer", and "use", respectively. The electricity amount data may indicate the amount of electricity (an example of first electricity amount data) produced by the producer A in a transaction of electricity, or may indicate the amount of electricity (an example of second electricity amount data) produced by being discharged by treating the discharging of the electricity as production.

### (Storage amount data)

Storage amount data is converted from electricity amount data indicating the state of electricity (production, retail, or consumption) via consumption amount data. The storage amount data returns to electricity amount data at any timing. The storage amount data can perpetuate the life cycle. The storage amount data includes information indicating whether electricity stored in a storage battery is derived from renewable energy or derived from non-renewable energy.

### (Consumption Amount Data)

Consumption amount data has a data structure in which, when electricity is consumed, the amount of the consumed electricity is indicated. By allocating predetermined electricity amount data, among a plurality of pieces of electricity amount data, to predetermined consumption amount data (an allocation process), the source from which the consumed electricity is procured is indicated. The consumption amount data may indicate the amount of electricity (an example of first consumption amount data) consumed by the consumer D in an electricity transaction, or may indicate the amount of electricity (an example of second consumption amount data) that is temporarily excluded from the electricity transaction, in association with charging (storing) of electricity by treating the charging of the electricity as consumption.

### <Data Structure of Each Piece of Data>

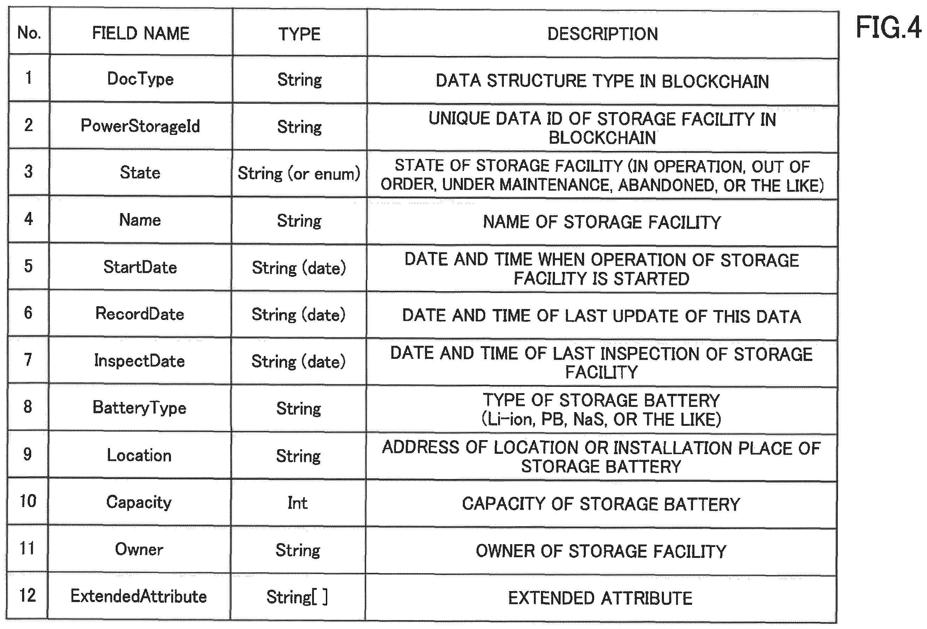

Next, each field of a data structure of each piece of data will be described with reference to FIG. 4 to FIG. 7.

### (Data Structure of Storage facility)

FIG. 4 is a diagram illustrating each field of a data structure of storage facility data. As illustrated in FIG. 4, the data structure of the storage facility data includes a data structure type in the blockchain, a unique data ID of a storage facility in the blockchain, the state of the storage facility (in operation, out of order, under maintenance, abandoned, or the like), the name of the storage facility, the date and time when the operation of the storage facility is started, the date and time of the last update of this data, the date and time of the last inspection of the storage facility, the type of a storage battery (Li-ion, PB, NaS, or the like), the address of the location or the installation place of the storage battery, the capacity of the storage battery, an owner of the storage facility, and an extended attribute.

### (Data Structure of Electricity Amount Data)

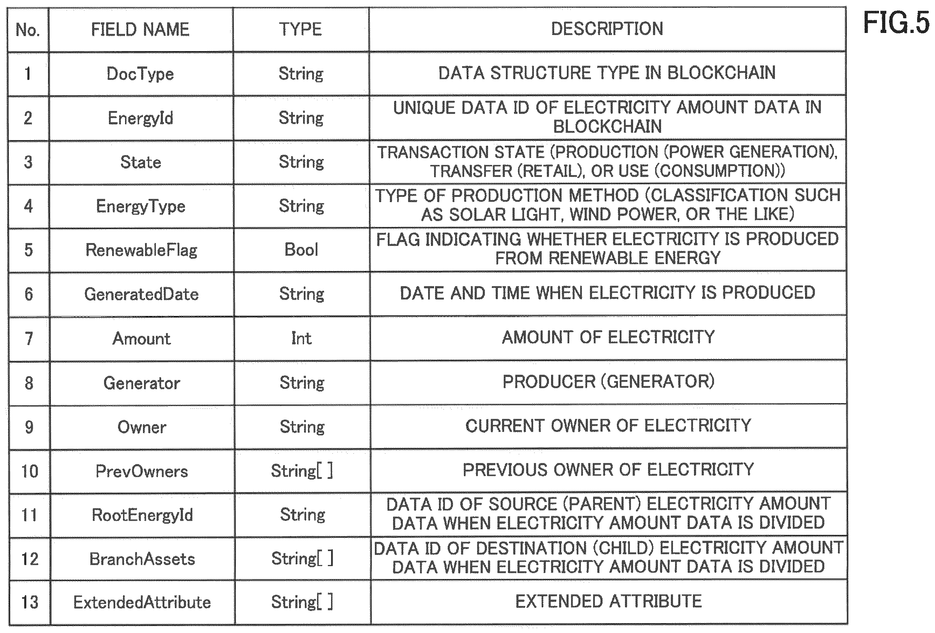

FIG. 5 is a diagram illustrating each field of a data structure of electricity amount data. The electricity amount data is data indicating the amount of electricity that is a transaction target.

As illustrated in FIG. 5, the data structure of the electricity amount data includes a data structure type in the blockchain, a unique data ID of the electricity amount data in the blockchain, a transaction state (production (generation), transfer (retail), use (consumption), or the like), a type of production method (classification such as solar light, wind power, or the like), a flag indicating whether electricity is produced from renewable energy, the date and time when the electricity is produced, the amount of the electricity, a producer (generator), the current owner of electricity, the previous owner of electricity, a data ID of source (parent) electricity amount data when the electricity amount data is divided, a data ID of destination (child) electricity amount data when the electricity amount data is divided, and an extended attribute. For example, in a case where the amount of electricity produced is 10 kWh and the intermediary agent C sells (transfers) 6 kWh to the consumer D, parent electricity amount data indicating the amount of electricity of 4 kWh and child electricity amount data indicating the amount of electricity of 6 kWh are generated. Then, data IDs are respectively assigned to the parent electricity amount data and the child electricity amount data and managed as illustrated in FIG. 5.

Further, when electricity amount data is associated with consumption amount data by the "flag indicating whether electricity is produced from renewable energy" in the field NO. 5 of FIG. 5, it is possible to manage whether electricity in the consumption amount data is derived from renewable energy or non-renewable energy.

The intermediary agent C may sell electricity derived from non-renewable energy (fossil fuel) to the Japan Electric Power Exchange (JEPX) without creating electricity amount data in the case of surplus electricity.

### (Data Structure of Consumption Amount Data)

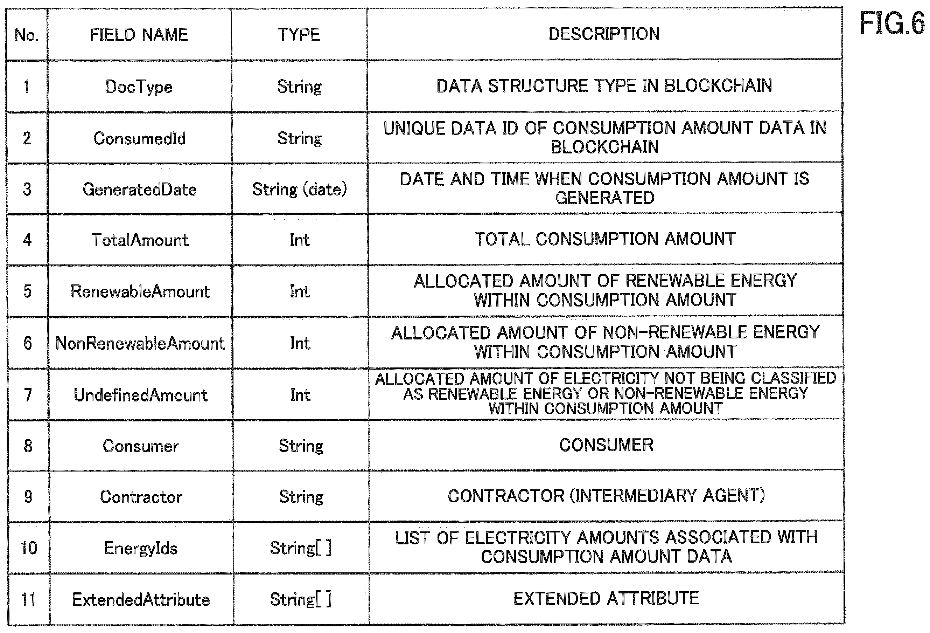

FIG. 6 is a diagram illustrating each field of a data structure of consumption amount data. The consumption amount data is data indicating the amount of electricity consumed by a consumer or the amount of electricity charged in a storage battery and regarded as being consumed.

As illustrated in FIG. 6, the data structure of the consumption amount data includes a data structure type in the blockchain, a unique data ID of the consumption amount data in the blockchain, the date and time when a consumption amount is generated, a total consumption amount, the allocated amount of renewable energy within the consumption amount, the allocated amount of non-renewable energy within the consumption amount, the allocated amount of electricity not being classified as renewable energy or non-renewable energy within the consumption amount, a consumer, a contractor (intermediary agent), a list of electricity amounts associated with the consumption amount data, and an extended attribute.

In practice, after electricity is consumed, electricity amount data of produced electricity is assigned to consumption amount data of the consumed electricity. A consumption amount to which an amount of electricity derived from renewable energy is allocated is written in the field No. 5 of FIG. 6 as a consumption amount derived from the renewable energy, and a total amount is written in the field No. 4 of FIG. 6. Similarly, a consumption amount to which an amount of electricity derived from non-renewable energy is allocated is written in the field No. 6 of FIG. 6 as a consumption amount derived from the non-renewable energy, and a total amount is written in the field No. 4 of FIG. 6. However, until the electricity amount data of the produced electricity is allocated to the consumption amount data of the consumed electricity, it is unknown whether electricity allocated to a consumption amount is electricity derived from renewable energy or electricity derived from non-renewable energy. Thus, the consumption amount is temporarily written in the field No. 7 of FIG. 6. After it becomes clear whether the electricity is electric power derived from renewable energy or electric power derived from non-renewable energy, the consumption amount written in the field No. 7 of FIG. 6 is reduced by subtracting by the consumption amount to be written in the field No. 5 or the field No. 6 of FIG. 6.

### (Data Structure of Storage Amount Data)

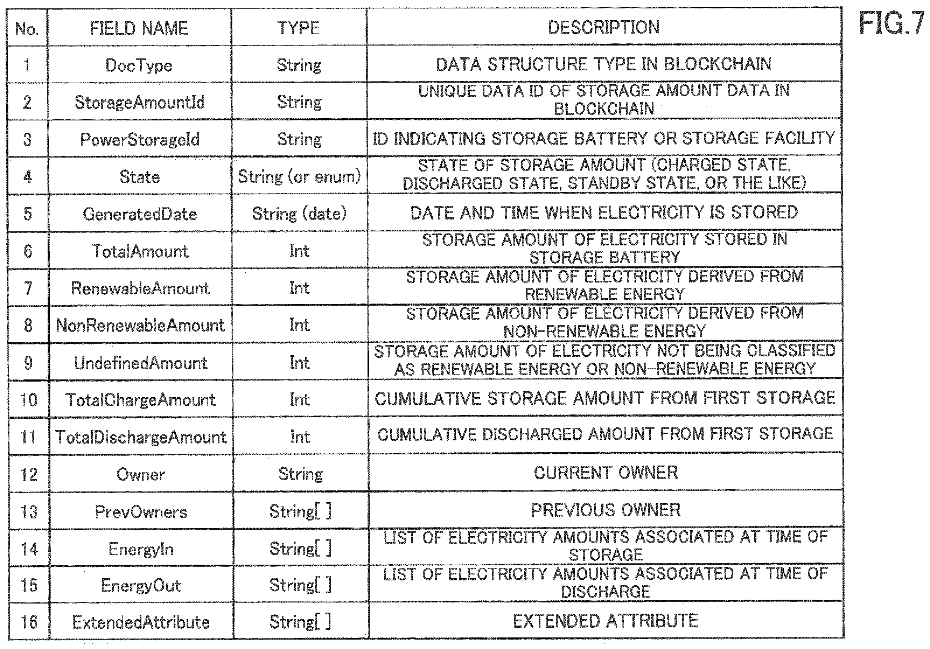

FIG. 7 is a diagram illustrating each field of a data structure of storage amount data. The storage amount data indicates the amount of electricity stored in a storage battery.

As illustrated in FIG. 7, the data structure of the storage amount data includes a data structure type in the blockchain, a unique data ID of the storage amount data in the blockchain, an ID indicating a storage battery or a storage facility, the state of a storage amount (a charged state, a discharged state, a standby state, or the like), the date and time when electricity is stored, the storage amount of electricity stored in the storage battery, the storage amount of electricity derived from renewable energy, the storage amount of electricity derived from non-renewable energy, the storage amount of electricity not being classified as renewable energy or non-renewable energy, the cumulative storage amount from the first storage, a cumulative discharged amount from the first storage, the current owner, the previous owner, a list of electricity amounts associated at a time of storage, a list of electricity amounts associated at a time of discharge, and an extended attribute.

In the present embodiment, an electricity amount and a storage amount can be mutually converted. Therefore, the data structure of the storage amount data needs to be formed in consideration of the exchangeability between the electricity amount and the storage amount. As a data format of the storage amount in consideration of the above, a data structure satisfying at least two conditions below is formed.

As the first condition, as indicated in the fields No. 14 and No. 15 of FIG. 7, the data structure of the storage amount data includes fields in which electricity amounts associated at a time of storage and at a time of discharge are recoded. As the second condition, similar to the consumption amount data of FIG. 6, the data structure of the storage amount data includes fields indicating whether the storage amount of electricity is derived from renewable energy, is derived from non-renewable energy, or is not classified as indicated by the fields No. 7 to No. 9 of FIG. 7.

The data structure of the storage amount data includes the "cumulative storage amount from the first storage" as indicated in the field No. 10 of FIG. 7, and the "cumulative discharge amount from the first storage" as indicated in field No. 11 of FIG. 7. Therefore, a change in the storage capacity of the storage battery due to deterioration of the storage battery can be managed.

### [Processes or Operations of Transaction System]

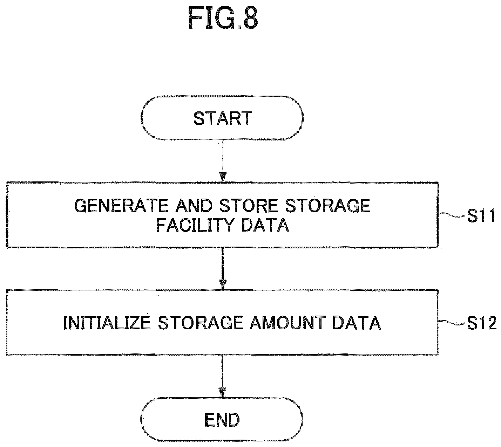

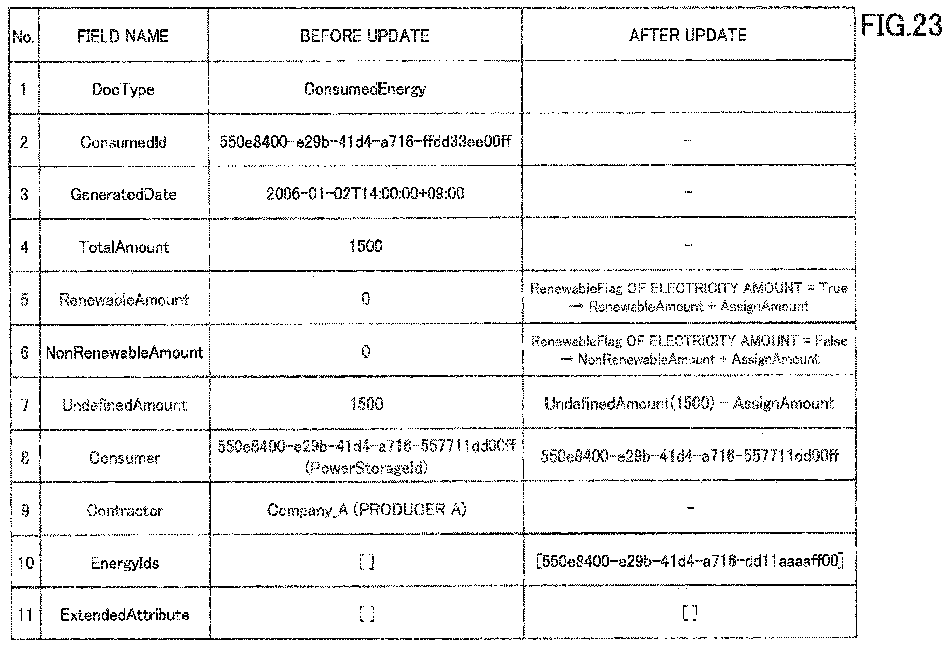

Next, processes or operations performed by the transaction system according to the present embodiment will be described with reference to FIG. 8 to FIG. 28. In the following, among the entities such as companies illustrated in FIG. 1, the producer A, the transaction market B, the intermediary agent C1, the consumer D, and the storage operator S1 are used as examples. Each entity or the like can store (write) data in its own node 7 upon a system or a device owned by each entity or the like are made applicable to the write standard API. As a result, each entity can use the blockchain network 100. For example, in the case of the producer A in FIG. 1, a control panel of a power generation facility is made applicable to the writing standard API. The control panel of the power generation facility then allows a user to perform a writing operation on the producer node 7a via the API. Alternatively, the producer system 5a can collect data on the amount of electric power generated from the power generation facility, and the producer system 5a performs a writing operation on the producer node 7a via the API.

Next, each process will be described.

### <Storage facility Registration Process>

First, a storage facility registration process will be described with reference to FIG. 8 to FIG. 11.

In order to charge or discharge the storage battery, the storage battery system 5f1 reads out storage amount data stored in the storage battery node 7f1 and rewrites the storage amount data. That is, before the storage battery is charged or discharged, the storage amount data needs to be present. Therefore, it is necessary to perform the storage facility registration process. In this registration process, storage facility data is registered, and storage amount data of the storage facility is initialized. Information of the storage facility is created at this time, and is managed by powerStorageId.

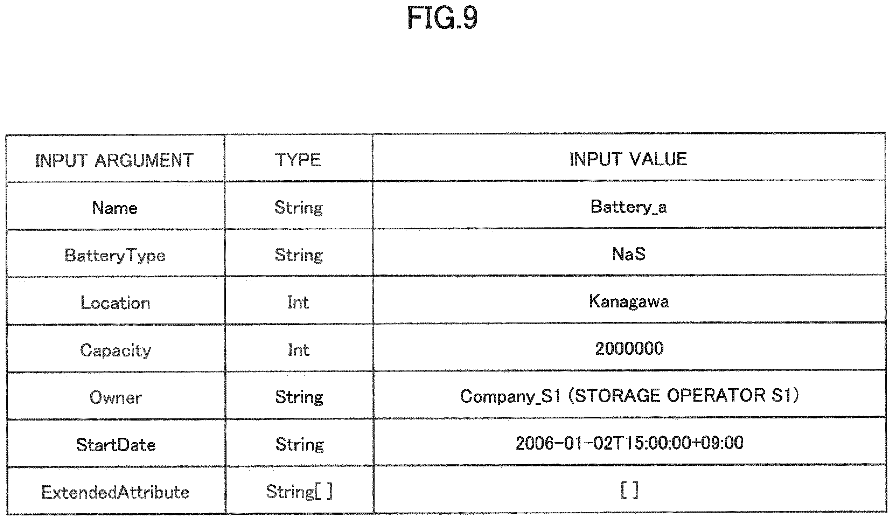

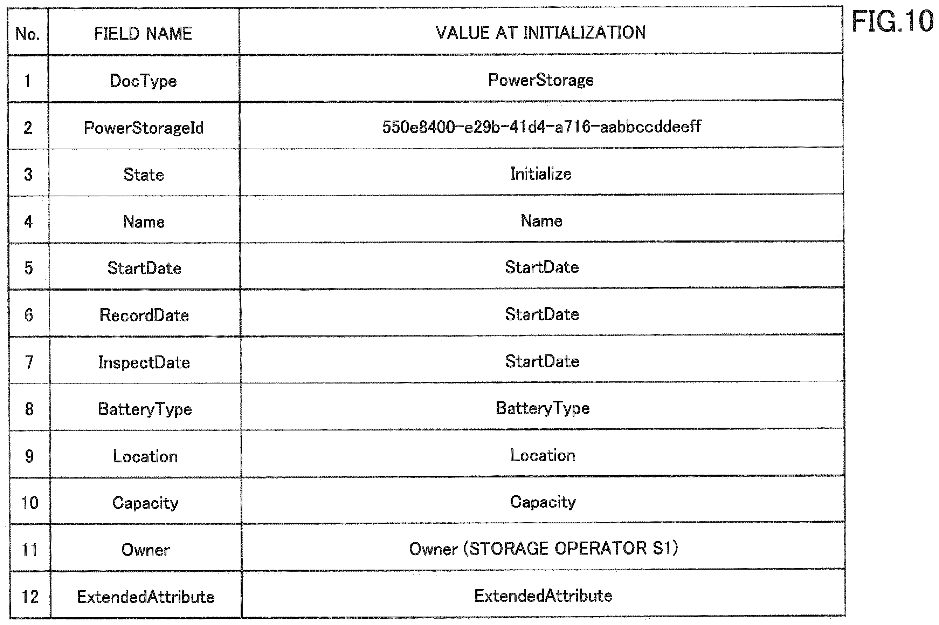

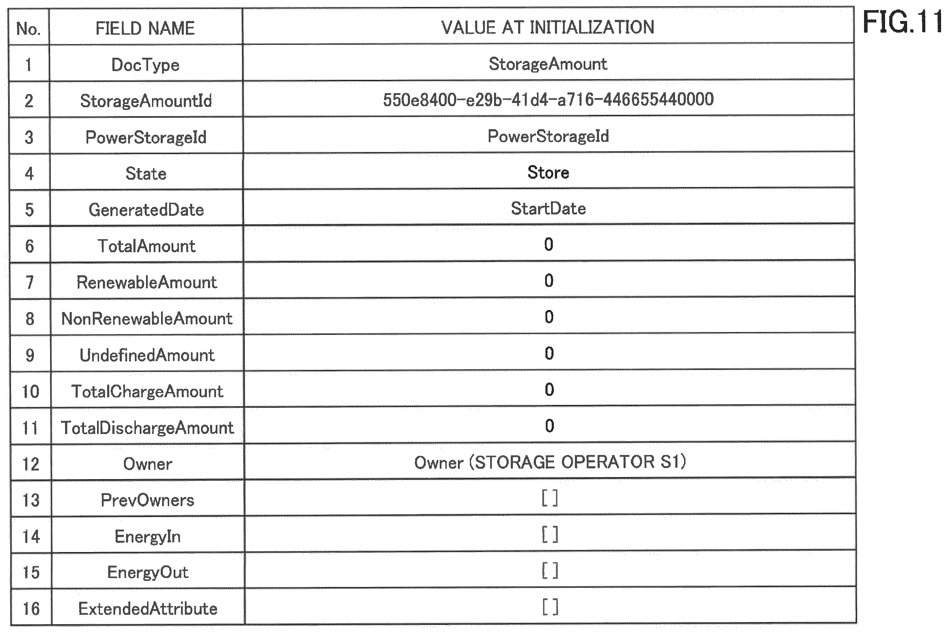

FIG. 8 is a flowchart illustrating the storage facility registration process. FIG. 9 is a diagram illustrating an example of a data structure of input data in the storage facility registration process. FIG. 10 is a diagram illustrating an example of a data structure of storage facility data in the storage facility registration process. FIG. 11 is a diagram illustrating an example of a data structure of storage amount data in the storage facility registration process.

S11: A generation unit 52f1 generates storage facility data illustrated in FIG. 10 based on input information (FIG. 9) input by the storage operator S1, and the transmission and reception unit 71f1 transmits the storage facility data to the storage battery node 7f1. Then, in the storage battery node 7f1, the transmission and reception unit 71f1 receives the storage facility data, and the storing and reading unit 78f1 stores the storage facility data in the storage unit 79f1. Then, the transmission and reception unit 71f1 transmits the storage facility data to nodes 7 such that the storage facility data is shared among the nodes 7. For example, a universally unique identifier (UUID) is used as a unique ID such as powerStorageId. An ID created by any other method can be used as long the ID can be uniquely created in the storage unit 79f1.

S12: Further, the transmission and reception unit 51f1 transmits a command to initialize storage amount data to the storage battery node 7f1 based on the input information (FIG. 9) input by the storage operator S1. Then, in the storage battery node 7f1, the transmission and reception unit 71f1 receives the command, and, as illustrated in FIG. 11, the storing and reading unit 78f1 initializes the storage amount data stored in the storage unit 79f1.

### <Relationship Among Storage Amount, Consumption Amount, and Electricity Amount>

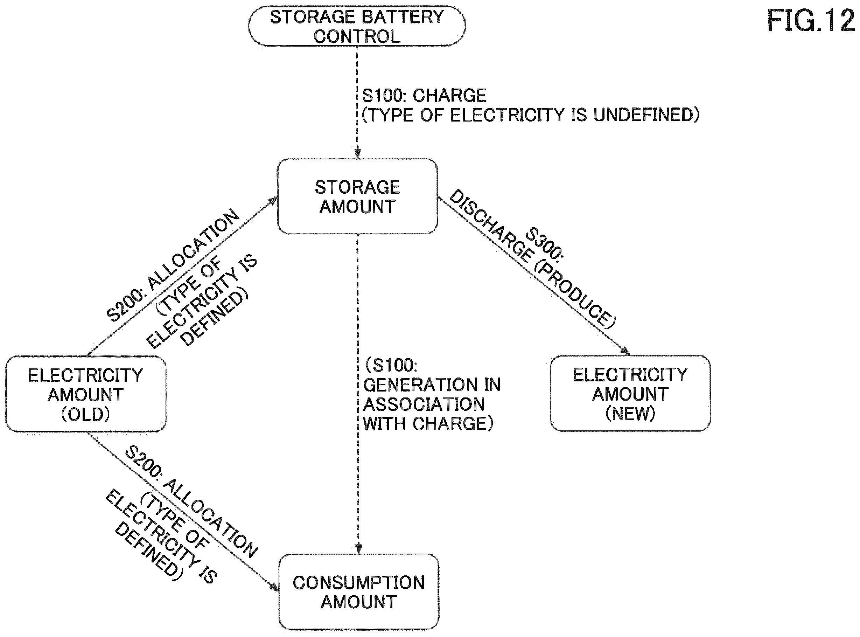

Next, before describing the next phase, the relationship among a storage amount, a consumption amount, and an electricity amount will be described with reference to FIG. 12. FIG. 12 is a diagram illustrating the relationship among an electricity amount, a storage amount, a consumption amount with respect to electricity. "Electricity amount data", "storage amount data", and "consumption amount data" described below are used in the blockchain network 100 according to the present embodiment. By using the pieces of data in the blockchain network 100, entities can mutually confirm a surplus or a shortage of the electricity amount or the storage amount and can interchange electricity over a wider range, thereby providing the pieces of data with evidence.

The "electricity amount data" indicates the amount of electricity in a transaction state such as "production (power generation)", "transfer (retail)", or "use (consumption)". The "electricity amount data" has a very short life cycle, and produced electricity needs to be consumed immediately. The Japanese law requires that supply-demand balance control be performed every 30 minutes, thus the life cycle is, for example, 30 minutes.

The "storage amount data" is converted from the production state or the transfer state of an electricity amount via a consumption amount.

That is, charging (storing) of electricity into the storage battery is temporarily excluded from an electricity transaction, and the charging (storing) of the electricity is treated as consumption of the electricity in the blockchain network 100 according to the present embodiment (S100). At this time, when allocation to the consumption amount data is performed, information such as a type of electricity (electricity produced from renewable energy or electricity produced from non-renewable energy) is reflected in the storage amount data (S200).

The "storage amount data" returns to electricity amount data at any timing (S300). That is, discharging of electricity from the storage battery causes the "storage amount data" to return to the electricity transaction again, and thus the discharging of the electricity is treated as production of the electricity in the blockchain network 100 according to the embodiment. Because electricity relating to electricity amount data having a very short life cycle can be excluded from the electricity transaction, the "storage amount data" can extend the life cycle. That is, the value of electricity can be maintained for a long period of time by converting the electricity amount data into the storage amount data (S100).

The "consumption amount data" has a data structure in which, when electricity is consumed, the amount of the consumed electricity is recoded. Electricity amount data of electricity produced by a predetermined producer is allocated to the consumption amount data of the electricity treated as being consumed by being charged (stored). Thus, the producer of the electric power related to storage amount data can be managed (S200). In addition, if electricity is produced from renewable energy by a predetermined producer, the consumption amount data to which electricity amount data of the electricity is allocated can indicate that the electricity produced from renewable energy is consumed. Similarly, if electricity is produced from non-renewable energy by a predetermined producer, consumption amount data to which electricity amount data of the electricity is allocated can indicate that the electricity produced from non-renewable energy is consumed.

### <Charge Process>

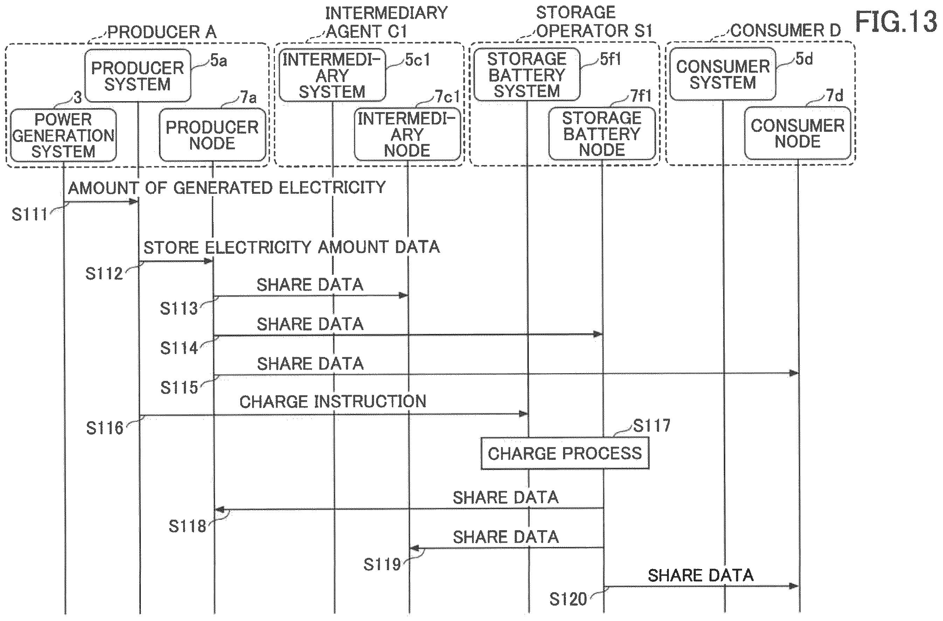

Next, a charge process will be described with reference to FIG. 13 to FIG. 17. FIG. 13 is a sequence diagram illustrating a charge process when charging is treated as consumption.

S111: In the power generation system 3, the measurement unit 33 measures the amount of generated electricity, and the transmission and reception unit 31 transmits electricity generation information indicating the measured amount of generated electricity to the producer system 5a. The transmission and reception unit 51a of the producer system 5a receives the electricity generation information.

S112: The transmission and reception unit 51a of the producer system 5a transmits electricity amount data including the electricity generation information to the producer node 7a. The transmission and reception unit 71a of the producer node 7a receives the electricity amount data, and the storing and reading unit 78a stores the electricity amount data in the storage unit 79a.

S113: The transmission and reception unit 71a of the producer node 7a transmits the electricity amount data to the intermediary node 7c1. The transmission and reception unit 71c1 of the intermediary node 7c1 receives the electricity amount data, and the storing and reading unit 78c1 stores the electricity amount data in the storage unit 79c1 such that the electricity amount data is shared.

S114: The transmission and reception unit 71a of the producer node 7a transmits the electricity amount data to the intermediary node 7c2. The transmission and reception unit 71c2 of the intermediary node 7c2 receives the electricity amount data, and the storing and reading unit 78c2 stores the electricity amount data in the storage unit 79c2 such that the electricity amount data is shared.

S115: The transmission and reception unit 71a of the producer node 7a transmits the electricity amount data to the consumer node 7d. The transmission and reception unit 71d of the consumer node 7d receives the electricity amount data, and the storing and reading unit 78d stores the electricity amount data in the storage unit 79d such that the electricity amount data is shared.

S116: After step S112, the transmission and reception unit 51a of the producer system 5a transmits, to the storage battery system 5f1, a charge instruction instructing the storage battery system 5f1 to perform the charge process. The transmission and reception unit 51f1 of the storage battery system 5f1 receives the charge instruction.

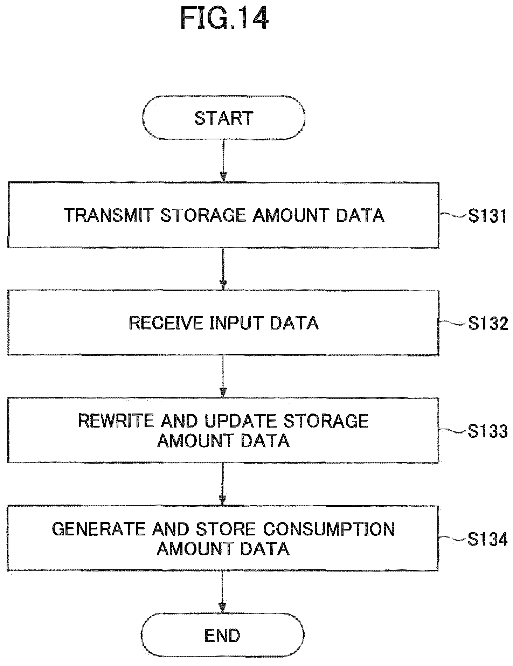

S117: The storage battery system 5f1 and the storage battery node 7f1 perform the charge process. The charge process will be described in detail with reference to FIG. 14 to FIG. 17. FIG. 14 is a flowchart illustrating the charge process.

### (Detailed Charge Process)

S131: The transmission and reception unit 51f1 transmits a request for the latest (current) storage amount data to the storage battery node 7f1. In the storage battery node 7f1, the transmission and reception unit 51f1 receives the request for the storage amount data. Further, in the storage battery node 7f1, the storing and reading unit 78f1 reads out the current storage amount data from the storage unit 79f1, and the transmission and reception unit 71f1 transmits the storage amount data read out by the storing and reading unit 78f1 to the storage battery system 5f1. In the storage battery system 5f1, the transmission and reception unit 51f1 receives the latest storage amount data.

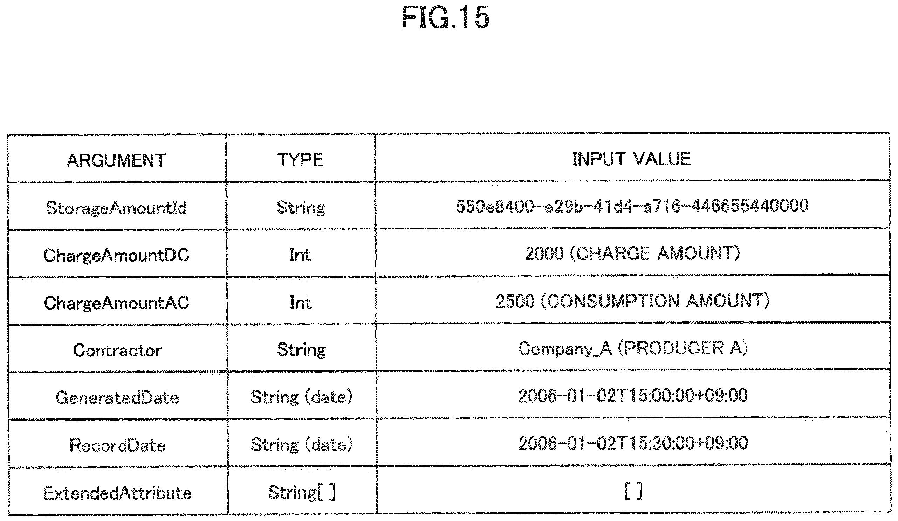

S132: In the storage battery system 5f1, based on step S116, the transmission and reception unit 51f1 references the latest storage amount data and transmits input data as illustrated in FIG. 15 to the storage battery node 7f1. The transmission and reception unit 71f1 of the storage battery node 7f1 receives the input data.

FIG. 15 is a diagram illustrating an example of a data structure of the input data in the charge process. StorageAmountId indicates an ID of the storage amount data read out from the storage unit 79f1. ChargeAmountDC indicates the amount of DC electricity ultimately stored in the storage battery. ChargeAmountAC indicates the amount of AC electricity supplied into the storage battery when the storage battery is charged. In general, storage batteries store electricity in the form of direct current. Thus, chargeAmountDC records the amount of DC electricity stored in the storage battery. In contrast, chargeAmountAC indicates how much electricity is supplied into the storage battery from an electrical gird, and electricity is traded in the form of alternating current. Because a loss occurs when the AC electricity is stored in the storage battery, the amount of input electricity is larger than the amount of charged electricity. That is, chargeAmountAC > chargeAmountDC is generally satisfied. For example, the consumption amount of electricity treated as being consumed by being stored is 2,500 kWh, and the amount of electricity actually stored is 2,000 kWh.

A contractor indicates a person (company) having an obligation to supply electricity to the storage battery. GeneratedDate indicates the date and time when electricity is produced (generated). RecordDate indicates the date and time when the storage battery is charged with electricity. ExtendedAttribute indicates an extended attribute.

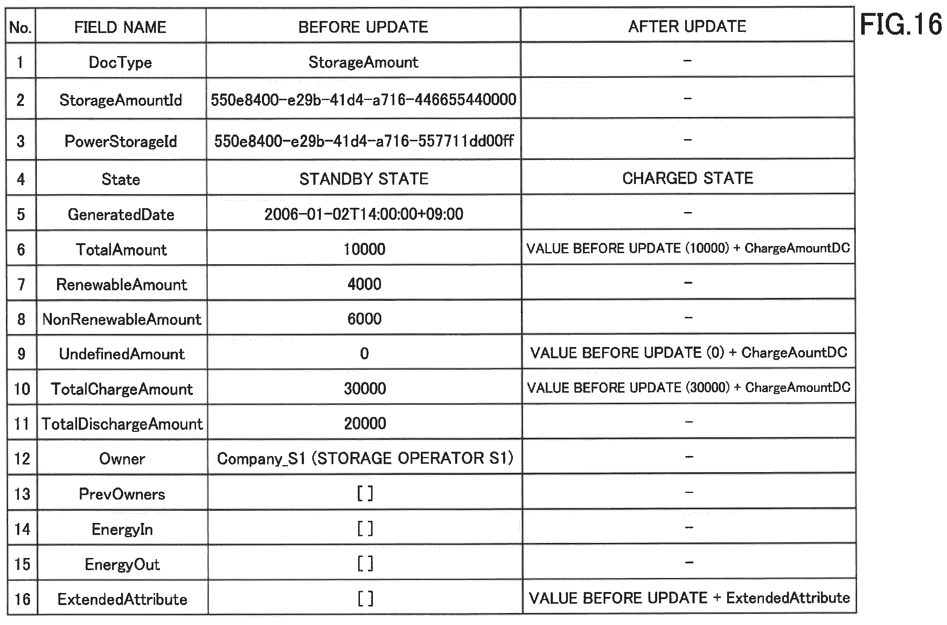

S133: In the storage battery node 7f1, based on the input data received in step S132, the storing and reading unit 78f1 updates the storage amount data stored in the storage unit 79f1 by rewriting the storage amount data as illustrated in FIG. 16. FIG. 16 is a diagram illustrating an example of a data structure of the storage amount data before and after being updated in the charge process. In the data structure of FIG. 16 and the like, "-" indicates a field in which data is not rewritten. Further, a type (classification) of renewable energy or non-renewable energy is unknown at this time, and thus the storage battery node 7f1 records all amounts charged at this time as an undefined amount in the undefinedAmount field, and treats the undefined amount as a charged amount that belongs to neither renewable energy nor non-renewable energy.

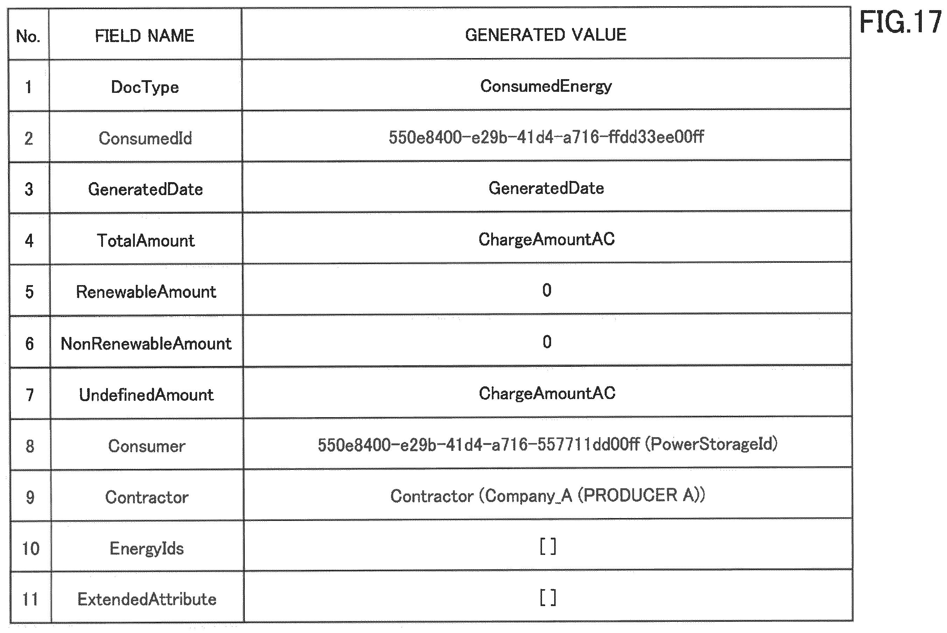

S134: Further, in the storage battery node 7f1, the storing and reading unit 78f1 generates new consumption amount data as illustrated in FIG. 17 based on the input data received in step S132, and stores the consumption amount data in the storage unit 79f1. FIG. 17 is a diagram illustrating an example of a data structure of the consumption amount data generated in the charge process.

As described above, when the charge process of charging the storage battery is performed, the storage amount data is updated and the new consumption amount data is generated. Because a flow of transactions of electricity from production (power generation) to consumption typically ends in association with the consumption, by treating charging as consumption, the charging is prevented from being omitted from the flow of transactions. At this point, as indicated by the fields No. 7, No. 8, and No. 9 of FIG. 16, it is not known whether stored electricity is electricity derived from renewable energy or electricity derived from non-renewable energy, and thus the amount of stored electricity in an unclassified state is stored.

### Returning to FIG. 13, data sharing is performed as follows.

S118: The transmission and reception unit 71f1 of the storage battery node 7f1 transmits the storage amount data updated in step S133 and the consumption amount data generated in step S134 to the producer node 7a. The transmission and reception unit 71a of the producer node 7a receives the updated storage amount data and the generated consumption amount data, and the storing and reading unit 78a stores the updated storage amount data and the generated consumption amount data in the storage unit 79a such that the updated storage amount data and the generated consumption amount data are shared.

S119: The transmission and reception unit 71f1 of the storage battery node 7f1 transmits the storage amount data updated in step S133 and the consumption amount data generated in step S134 to the intermediary node 7c1. The transmission and reception unit 71c1 of the intermediary node 7c1 receives the updated storage amount data and the generated consumption amount data, and the storing and reading unit 78c1 stores the updated storage amount data and the generated consumption amount data in the storage unit 79c1 such that the updated storage amount data and the generated consumption amount data are shared.

S120: The transmission and reception unit 71f1 of the storage battery node 7f1 transmits the storage amount data updated in step S133 and the consumption amount data generated in step S134 to the consumer node 7d. The transmission and reception unit 71d of the consumer node 7d receives the updated storage amount data and the generated consumption amount data, and the storing and reading unit 78d stores the updated storage amount data and the generated consumption amount data in the storage unit 79d such that the updated storage amount data and the generated consumption amount data are shared.

### <Allocation Process>

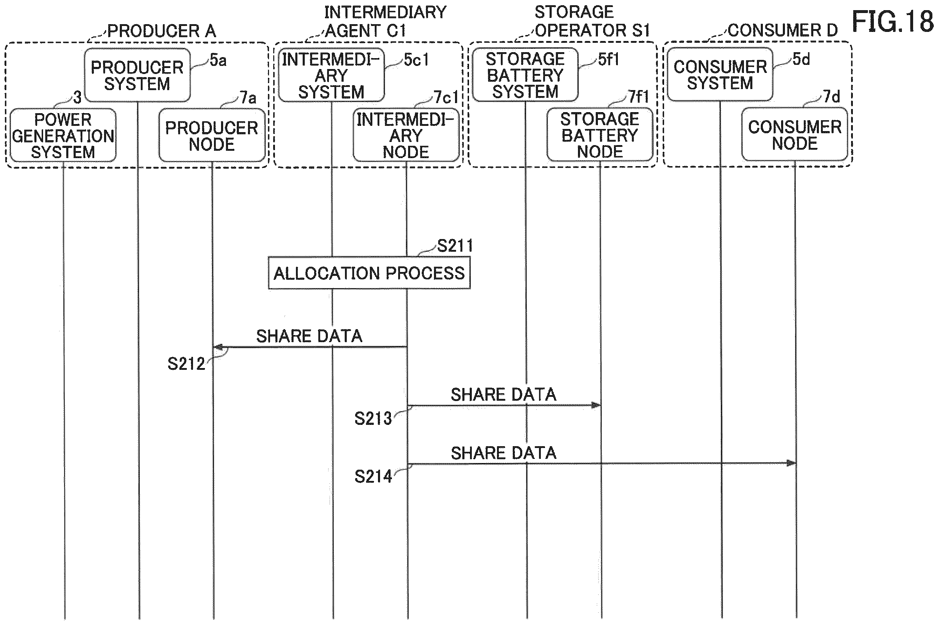

Next, an allocation process will be described with reference to FIG. 18 to FIG. 23. FIG. 18 is a sequence diagram illustrating a process of allocating renewable energy or non-renewable energy to an undefined (unallocated) storage amount. An example in which the producer A also serves as the intermediary agent C will be described.

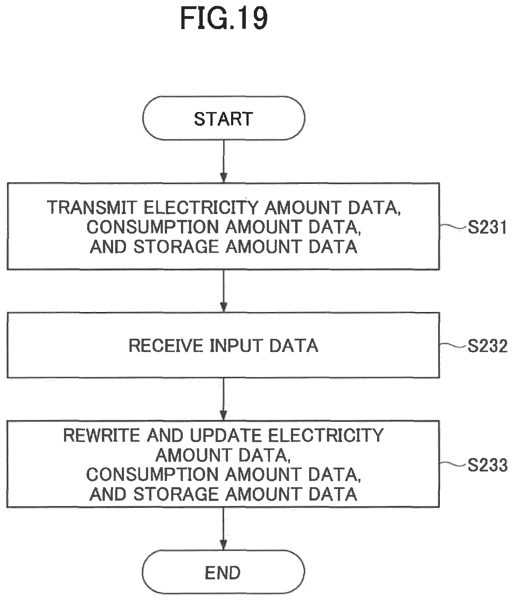

S211: The intermediary system 5c1 and the intermediary node 7c1 perform the allocation process every 30 minutes. The allocation process will be described in detail with reference to FIG. 19 to FIG. 23. FIG. 19 is a flowchart illustrating the allocation process.

### (Detailed Allocation Process)

S231: The transmission and reception unit 51c1 transmits a request for the latest pieces of data (the electricity amount data, the consumption amount data, and the storage amount data) to the intermediary node 7c1. In the intermediary node 7c1, the transmission and reception unit 71c1 receives the request for the latest pieces of data. Further, in the intermediary node 7c1, the storing and reading unit 78c1 reads out the latest pieces of data from the storage unit 79c1, and the transmission and reception unit 71c1 transmits the latest pieces of data read out by the storing and reading unit 78c1 to the intermediary system 5c1. In the intermediary system 5c1, the transmission and reception unit 51c1 receives the latest pieces of data.

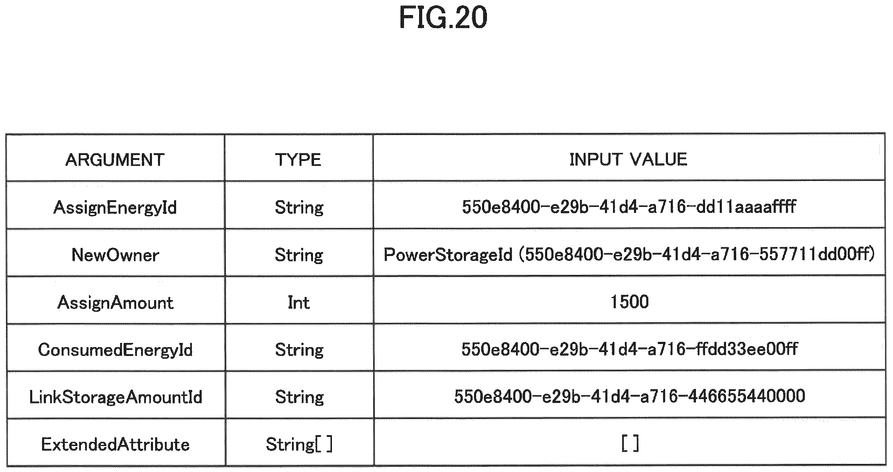

S232: In the intermediary system 5c1, the transmission and reception unit 51c1 references the latest pieces of data and transmits input data as illustrated in FIG. 20 to the intermediary node 7c1. FIG. 20 is a diagram illustrating an example of a data structure of the input data in the allocation process. The transmission and reception unit 71c1 of the intermediary node 7c1 receives the input data.

FIG. 20 is a diagram illustrating an example of the data structure of the input data in the allocation process. AssignEnergyId indicates a unique data ID of the allocation process in the blockchain. NewOwner indicates a new owner of electricity accompanying the allocation process. AssignAmount indicates the amount of allocated electricity. ConsumedEnergyId indicates a data ID of the consumption amount data. LinkStorageAmountId indicates a data ID of the storage amount data on which the charge process is performed in association with consumption. ExtendedAttribute indicates an extended attribute.

In the case of allocation without using a storage battery, the linkStorageAmountId field is empty. Alternatively, a function to perform allocation to a storage battery and a function to perform allocation without using a storage battery may be provided separately.

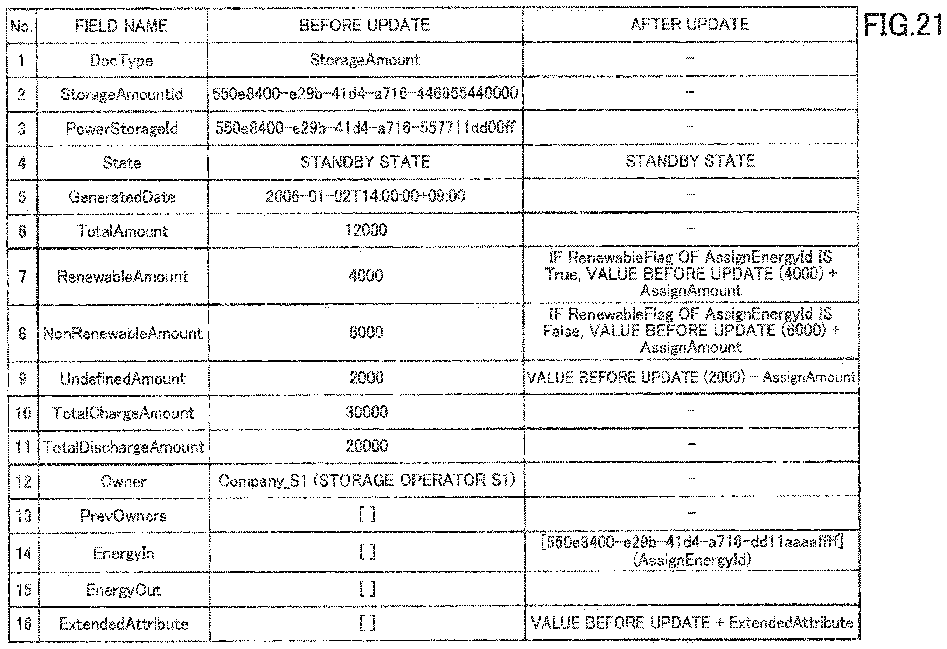

S233: In the intermediary node 7c1, based on the input data received in step S232, the storing and reading unit 78c1 updates the pieces of data (the electricity amount data, the consumption amount data, and the storage amount data) stored in the storage unit 79c1 by rewriting the pieces of data as illustrated in FIG. 21 to FIG. 23. By this process, the electricity amount data can be allocated to the consumption amount data and the storage amount data associated with the consumption amount data. As a result, the storage amount data is updated again. FIG. 16 is a diagram illustrating an example of the data structure of the storage amount data before and after being updated in the charge process.

S212: Referring back to FIG. 18, the transmission and reception unit 71c1 of the intermediary node 7c1 transmits the pieces of data (the electricity amount data, the consumption amount data, and the storage amount data) to the producer node 7a. The transmission and reception unit 71a of the producer node 7a receives the pieces of data, and the storing and reading unit 78a stores the pieces of data in the storage unit 79a such that the pieces of data are shared.

S213: The transmission and reception unit 71c1 of the intermediary node 7c1 transmits the pieces of data (the electricity amount data, the consumption amount data, and the storage amount data) to the storage battery node 7f1. The transmission and reception unit 71f1 of the storage battery node 7f1 receives the pieces of data, and the storing and reading unit 78f1 stores the pieces of data in the storage unit 79f1 such that the pieces of data are shared.

S214: The transmission and reception unit 71c1 of the intermediary node 7c1 transmits the pieces of data (the electricity amount data, the consumption amount data, and the storage amount data) to the consumer node 7d. The transmission and reception unit 71d of the consumer node 7d receives the pieces of data, and the storing and reading unit 78d stores the pieces of data in the storage unit 79d such that the pieces of data are shared.

### <Discharge Process>

Next, a discharge process will be described with reference to FIG. 24 to FIG. 28. FIG. 24 is a sequence diagram illustrating a discharge process when discharging is treated as production.

S311: The transmission and reception unit 51a of the intermediary system 5c1 transmits a discharge instruction instructing the storage battery system 5f1 to perform the discharge process. The transmission and reception unit 51f1 of the storage battery system 5f1 receives the discharge instruction.

S312: The storage battery system 5f1 and the storage battery node 7f1 perform the discharge process. The discharge process will be described in detail with reference to FIG. 25 to FIG. 28. FIG. 25 is a flowchart illustrating the discharge process.

### (Detailed Discharge Process)

S331: The transmission and reception unit 51f1 transmits a request for the latest (current) storage amount data to the storage battery node 7f1. In the storage battery node 7f1, the transmission and reception unit 71f1 receives the request for the latest storage amount data. Further, in the storage battery node 7f1, the storing and reading unit 78f1 reads out the latest storage amount data from the storage unit 79f1, and the transmission and reception unit 71f1 transmits the latest storage amount data read out by the storing and reading unit 78f1 to the storage battery system 5f1. In the storage battery system 5f1, the transmission and reception unit 51f1 receives the latest storage amount data.

S332: In the storage battery system 5f1, based on step S311, the transmission and reception unit 51f1 references the latest storage amount data and transmits input data as illustrated in FIG. 26 to the storage battery node 7f1. The transmission and reception unit 71f1 of the storage battery node 7f1 receives the input data.

FIG. 26 is a diagram illustrating an example of a data structure of the input data in the discharge process. StorageAmountId indicates an ID of the storage amount data read out from the storage unit 79f1. DischargeAmountDC indicates the amount of DC electricity discharged from the storage battery. DischargeAmountAC indicates the amount of AC electricity that can be eventually used after the discharge from the storage battery. Electricity is lost when the storage battery is discharged as well as when the storage battery is charged. Thus, dischargeAmountDC > dischargeAmountAC is generally satisfied. For example, the amount of discharged electricity is 2,000 kWh, and the actual production amount of electricity treated as being produced by being discharged is 1,500 kWh.

An owner indicates a destination to which electricity generated by being discharged from the storage battery is supplied, and indicates a company or the like that is an owner of the generated electricity. RenewableFlag is a flag for designating whether electricity to be discharged from the storage battery is electricity derived from renewable energy or electricity derived from non-renewable energy.

GeneratedDate indicates the date and time when the electricity is produced (generated). GeneratedDate is used as an argument used to create electricity amount data. RecordDate indicates the date and time when the storage battery is charged with the electricity. RecordDate is used to update the storage amount data. ExtendedAttribute indicates an extended attribute.

As described above, in the charge process and the discharge process, for example, in order to store electricity of 2,000 kWh in the storage battery, 2,500 kWh is required, and when electricity of 2,000 kWh is discharged from the storage battery again, electricity of 1,500 kWh is actually discharged. As a result, electricity of 1,500kWh is produced.

S333: In the storage battery node 7f1, the storing and reading unit 78f1 also serves as a data processing unit, and updates the storage amount data stored in the storage unit 79f1 by rewriting the storage amount data as illustrated in FIG. 27 based on the input data received in step S332. That is, the storage amount data is updated three times. FIG. 27 is a diagram illustrating an example of a data structure of the storage amount data before and after being updates in the discharge process. In a case where no storage battery is used as in the related art, an electricity amount is allocated to a consumption amount. However, in a case where the storage battery is used as in the present embodiment, an electricity amount is allocated to a storage amount associated with a consumption amount.

If the value of renewableAmount or nonRenewableAmount after the storage amount data is updated becomes a negative number, an error occurs in step S333 because the amount of stored electricity is not enough to be discharged (extracted).

S334: Further, in the storage battery node 7f1, based on the input data received in step S332, the storing and reading unit 78f1 generates electricity amount data of the electricity treated as being produced by being discharged from the storage battery as illustrated in FIG. 28, and stores the electricity amount data in the storage unit 79f1 via the storing and reading unit 78f1. FIG. 28 is a diagram illustrating an example of a data structure of the electricity amount data generated in the discharge process.

In this case, the storing and reading unit 78f1 can select the amount of renewable energy or the amount of non-renewable energy within a range of the amount of renewable energy or non-renewable energy recorded, as the amount of stored electricity. If the storing and reading unit 78f1 selects the amount of renewable energy as the amount of electricity, this amount of renewable energy is reduced from the amount of stored electricity. Conversely, if the storing and reading unit 78f1 selects the amount of non-renewable energy as the amount of electricity, this amount of non-renewable energy is reduced from the amount of stored electricity.

As described above, when the discharge process of discharging from the storage battery is performed, the storage amount data is updated and the electricity amount data is generated. Because a flow of transactions of electricity from production (power generation) to consumption typically starts in association with the production, by treating discharge as production, the discharge is prevented from being omitted from the flow of transactions. At this point, as indicated by the fields No. 7, No. 8, and No. 9 of FIG. 27, whether or not the discharged electricity is electricity derived from renewable energy or electricity derived from non-renewable energy is determined by the allocation process illustrated in FIG. 18.

### Returning to FIG. 24, data sharing is performed as follows.

S313: The transmission and reception unit 71f1 of the storage battery node 7f1 transmits the storage amount data updated in step S333 and the electricity amount data generated in step S334 to the producer node 7a. The transmission and reception unit 71a of the producer node 7a receives the updated storage amount data and the generated electricity amount data, and the storing and reading unit 78a stores the updated storage amount data and the generated electricity amount data in the storage unit 79a such that the updated storage amount data and the generated electricity amount data are shared.

S314: The transmission and reception unit 71f1 of the storage battery node 7f1 transmits the storage amount data updated in step S333 and the electricity amount data generated in step S334 to the intermediary node 7c1. The transmission and reception unit 71c1 of the intermediary node 7c1 receives the updated storage amount data and the generated electricity amount data, and the storing and reading unit 78c1 stores the updated storage amount data and the generated electricity amount data in the storage unit 79c1 such that the updated storage amount data and the generated electricity amount data are shared.

S315: The transmission and reception unit 71f1 of the storage battery node 7f1 transmits the storage amount data updated in step S333 and the electricity amount data generated in step S334 to the consumer node 7d. The transmission and reception unit 71d of the consumer node 7d receives the updated storage amount data and the generated electricity amount data, and the storing and reading unit 78d stores the updated storage amount data and the generated electricity amount data in the storage unit 79d such that the updated storage amount data and the generated electricity amount data are shared.

### [Main Effects of Embodiments]

As described above, according to embodiments described above, it is possible to construct a mechanism for accurately tracing (tracking) electricity transactions by using the blockchain network 100. This mechanism for tracking electricity by using the blockchain network 100 can be a means for certifying the value of using renewable energy instead of using a certificate. Further, this mechanism, especially with automation of the transaction system, can be a means for guaranteeing evidence for the value of using renewable energy at a low cost, as compared to a cost required for issuing a certificate. Further, unlike the case of issuing a certificate, the usage of renewable energy is facilitated by adding the value of renewable energy to real electricity. Further, the mechanism can distinguish cases where, for example, the value of renewable energy is allocated after using fossil fuels such as petroleum.

Further, according to the embodiments, storing electricity in a storage battery is treated as consumption, and discharging electricity from the storage battery as is treated as production. In this manner, storing electricity and discharging electricity can be prevented from being omitted from a flow of transactions of electricity from power generation to consumption. Accordingly, even when a storage battery is used, transactions of electricity by using the blockchain can be flexibly performed.

### [Other]

(1) Further, in any of the above-described embodiments, electricity is used as an example of an asset; however, the present invention is not limited thereto. Examples of the asset include an asset that exists physically (or in reality) and an asset that does not exist physically (or in reality). Data related to electricity is an example of data related to an asset. Data related to surplus electricity is an example of data related to a surplus of an asset. Data related to electricity shortage is an example of data related an shortage of an asset.

(1-1) Examples of the asset that exists physically (or in reality) include food items such as grains, vegetables, fruits, meat, seafood, and processed products. If the asset is grains, vegetables, or fruits, the data related to the asset includes, as a "type of production method", supplementary information such as information indicating whether pesticides are used or information indicating a producer or the place of production.

If the asset is meat, the data related to the asset includes, as a "type of production method", supplementary information such as information indicating whether the meat is from an animal raised using genetically modified crops or information indicating a producer or the place of production.

If the asset is seafood such as fish or shellfish, the data related to the asset includes, as a "type of production method", supplementary information such as information indicating whether the seafood is natural or of aquaculture origin or information indicating a producer (fisherman) or a production area (fishing area).

If the asset is a processed product, the data related to the asset includes, as a "type of production method", supplementary information such as information indicating an allergen, information indicating whether the product is processed by using a genetically modified crop, or information indicating the location of a processor or a processing plant.

(1-2) Further, examples of the asset that exists physically (or in reality) include real estate, such as land and buildings, and movable property such as goods or quantities of goods.

If the asset is real estate, the data related to the asset includes supplementary information on ownership and the like. If the asset is movable property, the data related to the asset includes supplementary information on ownership and the like.

(1-3) On the other hand, examples of the asset that does not exist physically (or in reality) include tokens (virtual currency) or quantities of tokens, carbon dioxide emission credits, intellectual property rights, and contracts.

If the asset is a token, the data related to the asset includes supplementary information on ownership and the like.

If the asset is a carbon dioxide emission credit, the data related to the asset indicates supplementary information on ownership and the like.

If the asset is a right such as an intellectual property right, the data related to the asset indicates supplementary information on the owner of the right, the transferee of the right, the licensee, and the like.

If the asset is a contract, the data related to the asset indicates supplementary information on contract conditions, contract performance, and the like. In addition, not only contracts, but also treaties, agreements, promises, memorandums (memos), notes, and the like may be treated as assets.

(1-4) Further, as an asset involving post-payment processing, the asset may be, for example, gas, tap water, or communication, in addition to electricity. In the case of gas, tap water, or communication, the data related to the asset indicates supplementary information on ownership and the like.

(2) Further, electricity produced by solar light is an example an asset produced by a specific type of production method. Examples of the asset produced by the specific type of production method include an asset produced by any one of various "types of production methods" as described above.

(3) Further, the CPU 101 may be a single device or multiple devices.

(4) Each of the functions of the above-described embodiments may be implemented by one or more processing circuits or circuitry. In the above-described embodiments, a "processing circuit or circuitry" include a programmed processor, as a processor includes circuitry. The "processing circuit or circuitry" also includes devices such as an application specific integrated circuit (ASIC), digital signal processor (DSP), field programmable gate array (FPGA), System on Chip (SOC), and graphical processing unit (GPU), and conventional circuit components designed to perform the above-described functions.

(5) Further, any of the above-described programs may be stored in a (non-transitory) recording medium for distribution.

## Claims

1. A node for sharing, in a blockchain network, first electricity amount data indicating an amount of produced electricity and first consumption amount data indicating an amount of consumed electricity, in an electricity transaction from production to consumption, the node comprising:
a data processing unit configured to perform, in a case where a storage battery is used in the electricity transaction, a process of generating second consumption amount data indicating an amount of electricity consumed in association with charging of the storage battery; and
a transmitting unit configured to transmit the second consumption amount data to a particular node in the blockchain network.

2. The node according to claim 1, wherein
the data processing unit is configured to update storage amount data indicating an amount of electricity stored in the storage battery in association with the charging of the storage battery, and
the transmitting unit is configured to transmit the updated storage amount data to the particular node in the blockchain network.

3. The node according to claim 2, wherein
the storage amount data includes a type of production method of the electricity, and the type is undefined in the updated storage amount data.

4. The node according to claim 3, wherein
the data processing unit is configured to re-update, based on a type of predetermined production method assigned when supply-demand balance control of the electricity is performed by an intermediary system that intermediates the electricity transaction, the updated storage amount data by defining the type undefined in the updated storage amount data as the type of the predetermined production method, and
the transmitting unit is configured to transmit the re-updated storage amount data to the particular node.

5. The node according to claim 3, wherein the type of the production method indicates that the electricity is produced by using a predetermined type of resource.

6. The node according to claim 4, wherein
the re-updated storage amount data includes the type of the production method of the electricity, and the type of the production method of the electricity is defined as the type of the predetermined production method based on the type of the predetermined production method assigned when the supply-demand balance control of the electricity is performed by the intermediary system that intermediates the electricity transaction.

7. The node according to any one of claims 1 to 6, wherein
the data processing unit is configured to perform a process of generating second electricity amount data indicating an amount of electricity produced in association with discharging from the storage battery, by treating the discharging from the storage battery as the production, and
the transmitting unit is configured to transmit the second electricity amount data to the particular node.

8. The node according to claim 6, wherein
the data processing unit is configured to perform a process of generating second electricity amount data indicating an amount of electricity produced in association with discharging from the storage battery by treating the discharging from the storage battery as the production, and update the re-updated storage amount data in association with the discharging from the storage battery, and
the transmitting unit is configured to transmit the second electricity amount data and the storage amount data updated three times to the particular node.

9. A data sharing method executed by a node for sharing, in a blockchain network, first electricity amount data indicating an amount of produced electricity and first consumption amount data indicating an amount of consumed electricity, in an electricity transaction from production to consumption, the data sharing method comprising:
generating, in a case where a storage battery is used in the electricity transaction, second consumption amount data indicating an amount of electricity consumed in association with charging of the storage battery;
transmitting the second consumption amount data to a particular node in the blockchain network;
generating second electricity amount data indicating an amount of electricity produced in association with discharging from the storage battery by treating the discharging from the storage battery as the production; and
transmitting the second electricity amount data to the particular node.

10. A program for causing a computer to execute the data sharing method of claim 9.
